# EUROPEAN PATENT SPECIFICATION

(11) **EP 1 552 698 B1**
(45) Date of publication and mention of the grant of the patent: **08.05.2013**
(21) Application number: 03799377.1
(22) Date of filing: 01.10.2003
(51) Int. Cl.: H04N 7/10, H04N 21/436, H04N 21/4363, H04N 21/438, H04N 21/41, H04N 7/18

(54) **VIDEO TRANSMISSION SYSTEMS AND METHODS FOR A HOME NETWORK**
VIDEO ÜBERTRAGUNGSSYSTEME UND VERFAHREN FÜR EIN HEIMNETZWERK
SYSTEMES ET PROCEDES DE TRANSMISSION VIDEO POUR RESEAU DOMESTIQUE

(30) Priority: 02.10.2002 US 263270
(43) Date of publication of application: 13.07.2005
(73) Proprietor: Scientific-Atlanta, LLC, Lawrenceville, GA 30044 (US)
(72) Inventor: ROBERTSON, Neil C., Lilburn, GA 30047 (US); LETT, David B., Duluth, GA 30097 (US); FERNANDEZ, Jose M., Lilburn, GA 30047 (US)
(74) Representative: Mathys & Squire LLP
(86) International application number: PCT/US2003/031104
(87) International publication number: WO 2004/032514

(56) References cited:
- EP-A- 0 325 331
- WO-A-00/45601
- WO-A-02/11451
- WO-A1-00/45590
- US-A- 5 023 931
- US-A- 5 294 981
- US-A- 5 574 964
- US-A- 5 579 308
- US-A- 5 760 822
- US-A- 5 774 527
- US-A- 5 808 659
- US-A- 5 940 387
- US-A- 6 005 861
- US-A1- 2002 035 729
- US-A1- 2002 059 615
- US-A1- 2002 059 617
- US-A1- 2002 133 558
- US-B1- 6 286 142

## Description

### FIELD OF THE INVENTION

This invention relates in general to television systems, and more particularly, to the field of television set-top terminals.

### DESCRIPTION OF THE RELATED ART

Cable television systems are now capable of providing many services in addition to analog broadcast video. In implementing enhanced programming, the set-top terminal (STT), otherwise known as the set-top box, has become an important computing device for accessing various video services. In addition to supporting traditional analog broadcast video functionality, many STTs now also provide other functionality, such as, for example, an interactive program guide, video-on-demand, and video recording and playback.

An STT is typically connected to a communications network (*e.g*., a cable or satellite television network) and includes hardware and software necessary to provide various services and functionality. Preferably, some of the software executed by an STT is downloaded and/or updated via the communications network. Each STT also typically includes a processor, communication components, and memory, and is connected to a television or other display device. While many conventional STTs are stand-alone devices that are externally connected to a television, an STT and/or its functionality may be integrated into a television or other device, as will be appreciated by those of ordinary skill in the art.

An STT is typically located at a customer premises and is typically used by two or more users (*e.g*., household members). The users of an STT may have different viewing preferences and may therefore have a conflict over what television service or function is to be provided by the STT. One approach to solving this problem is for users to purchase additional STTs that are capable of providing the same functionality as a currently available STT. However, STTs can be expensive and users may not be willing to purchase additional expensive STTs. Therefore, there exists a need for systems and methods for addressing these and/or other problems associated with STTs.

US 5023931 relates to a home communication network using a single cable line and discloses the transmission of recorded programs from VCRs to different locations within a house using free channels and further discloses a splitter and filters to avoid local signals leaving the home network. WO 00/45590 discloses a master subscriber station which receives and further distributes content to slave set top boxes. The master STB uses non occupied frequencies. A power splitter at the income to a local home networks avoids interference of the frequencies at the home network to the global network, e.g., the cable TV network.

US 5294981 discloses a cable television system which provides several channels, from satellite, or from locally storage units to different clients. Diplexer, tuners and modulators are used to avoid any interference within the home or hotel network. Details on different splitters and tuners are shown. EP 0325331 discloses a signal distribution cable network with an emphasis on signal strength control.

### BRIEF DESCRIPTION OF THE DRAWINGS

The invention can be better understood with reference to the following drawings. The components in the drawings are not necessarily drawn to scale, emphasis instead being placed upon clearly illustrating the principles of the invention. In the drawings, like reference numerals designate corresponding parts throughout the several views.
FIG. 1 is a simplified block diagram depicting a non-limiting example of a subscriber television system.
FIG. 2 is a simplified block diagram illustrating selected components of a set-top terminal (STT) that represents one embodiment of the STT shown in FIG. 1.
FIG. 3 is a simplified block diagram depicting a local television network (LTN) that represents an embodiment of the LTN shown in FIG. 1.
FIG. 4 is a simplified block diagram depicting an LTN that represents an embodiment of the LTN shown in FIG. 1.
FIG. 5 is a simplified block diagram depicting selected components of an IR receiver according to an embodiment of the invention.
FIG. 6 is a simplified block diagram depicting an LTN that represents one embodiment of the LTN shown in FIG. 1.
FIG. 7A is a simplified block diagram depicting a converter/splitter module that represents one embodiment of the converter/splitter module shown in FIG. 6.
FIG. 7B is a simplified block diagram depicting a converter/splitter module that represents another embodiment of the converter/splitter module shown in FIG. 6.
FIG. 8 is a simplified block diagram illustrating selected data flows in the STT according to one embodiment of the invention.
FIG. 9 is a simplified block diagram depicting an LTN that represents an embodiment of the LTN shown in FIG. 1.
FIG. 10A is a simplified block diagram depicting a converter module that represents one embodiment of the converter module shown in FIG. 9.
FIG. 10B is a simplified block diagram depicting a converter module that represents another embodiment of the converter module shown in FIG. 9.
FIG. 11A is a simplified block diagram depicting a splitter/bypass module that represents one embodiment of the splitter/bypass module shown in FIG. 9.
FIG. 11B is a simplified block diagram depicting a splitter/bypass module that represents another embodiment of the splitter/bypass module shown in FIG. 9.
FIG. 12A is a simplified block diagram depicting an LTN that represents an embodiment of the LTN shown in FIG. 1.
FIG. 12B is a simplified block diagram depicting an LTN that represents another embodiment of the LTN shown in FIG. 1.
FIG. 12C is a simplified block diagram depicting an LTN that represents a further embodiment of the LTN shown in FIG. 1.
FIG. 13A is a simplified block diagram depicting a splitter/amplifier that represents one embodiment of the splitter/amplifier shown in FIG. 12B.
FIG. 13B is a simplified block diagram depicting a splitter/amplifier that represents another embodiment of the splitter/amplifier shown in FIGS. 12A & 12B.
FIG. 14 is a simplified block diagram illustrating selected data flows in the STT 200 according to another embodiment of the invention.
FIG. 15A is a simplified block diagram illustrating selected components of an STT that represents an embodiment of the STT shown in FIG. 1.
FIG. 15B is a simplified block diagram illustrating selected components of an STT that represents an embodiment of the STT shown in FIG. 1.
FIG. 16 is a simplified block diagram illustrating selected components of an expander card.
FIG. 17 is a simplified block diagram depicting one possible embodiment of the signal processing system.
FIG. 18A is a simplified block diagram illustrating an output system that represents one embodiment of the output system shown in FIG. 16.
FIG. 18B is a simplified block diagram illustrating an output system that represents one embodiment of the output system shown in FIG. 16.
FIG. 18C is a simplified block diagram illustrating an output system that represents one embodiment of the output system shown in FIG. 16.
FIG. 19 is a schematic diagram depicting a non-limiting example of an STT that can accommodate an expander card.
FIGS. 20A and 20B are schematic diagrams depicting non-limiting examples of how an expander card 1500 may be connected to the STT shown in FIG. 1.
FIG. 21 is a simplified block diagram illustrating selected components of an STT that represents an embodiment of the STT shown in FIG. 1.
FIG. 22 is a simplified block diagram illustrating selected components of an STT subsystem according to one embodiment of the invention.
FIG. 23 is a simplified block diagram illustrating shared resources according to one embodiment of the invention.
FIG. 24 is a schematic diagram depicting a non-limiting example of a remote control device that may be used to provide user input to an STT shown in FIG. 1.
FIG. 25 is a schematic diagram depicting a non-limiting example of an IPG screen that may be presented by IPG application in response to user input that may be provided via, for example, the activation of the guide key shown in FIG. 24.
FIG. 26 is a schematic diagram depicting a non-limiting example of a Recorded Programs List screen that contains a list of recorded video presentations.
FIG. 27 is a schematic diagram depicting an non-limiting example of a VOD selection screen that may be provided by the VOD application shown in FIG. 2.
FIG. 28 is a flow chart illustrating a non-limiting example of a method for enabling an STT to receive remote control commands from an IR remote control device that is located in another room of a customer premises.
FIG. 29 is a flow chart illustrating a non-limiting example of a method that enables an STT to provide television services to a television that is remotely located (e.g., in another room) using pre-existing transmission links at a customer premises.
FIG. 30 is a flow chart illustrating a non-limiting example of a method that enables a first STT to provide recorded television presentations to a second STT that is remotely located (e.g., in another room) using pre-existing transmission links at a customer premises.
FIG. 31 is a flow chart illustrating a non-limiting example of a method that may be performed by an STT comprising an expander card, which may have been added to the STT by a user of the STT.
FIG. 32 is a flow chart illustrating a non-limiting example of a method that may be performed by an STT comprising a plurality of tuners, wherein each of the plurality of tuners provides television services to a respective television.
FIG. 33 is a flow chart illustrating a non-limiting example of a method that may be performed by an STT comprising a plurality of processors for providing functionality to respective televisions.
FIG. 34 is a flow chart illustrating a non-limiting example of a method for enabling an expander card to distinguish its output from that of other expander cards.
FIG. 35 is a flow chart illustrating a non-limiting example of a method that may be used to optimize the quality of a QAM signal received by an STT.

### DETAILED DESCRIPTION OF THE PREFERRED EMBODIMENTS

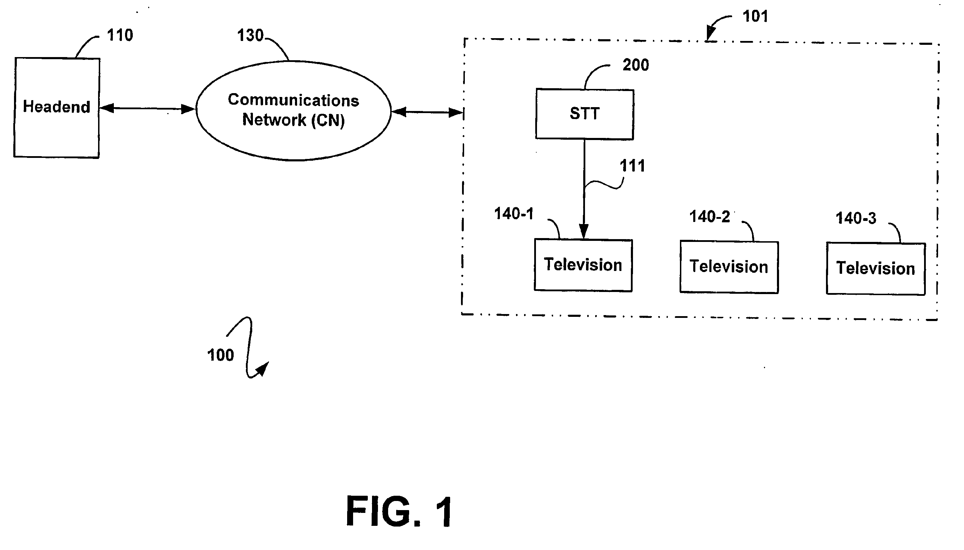

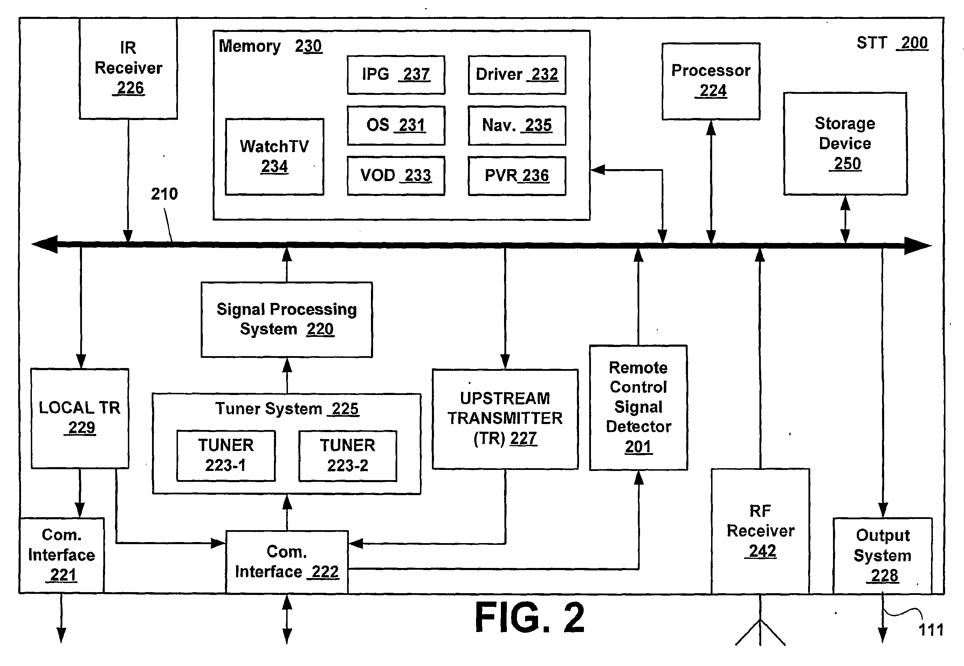

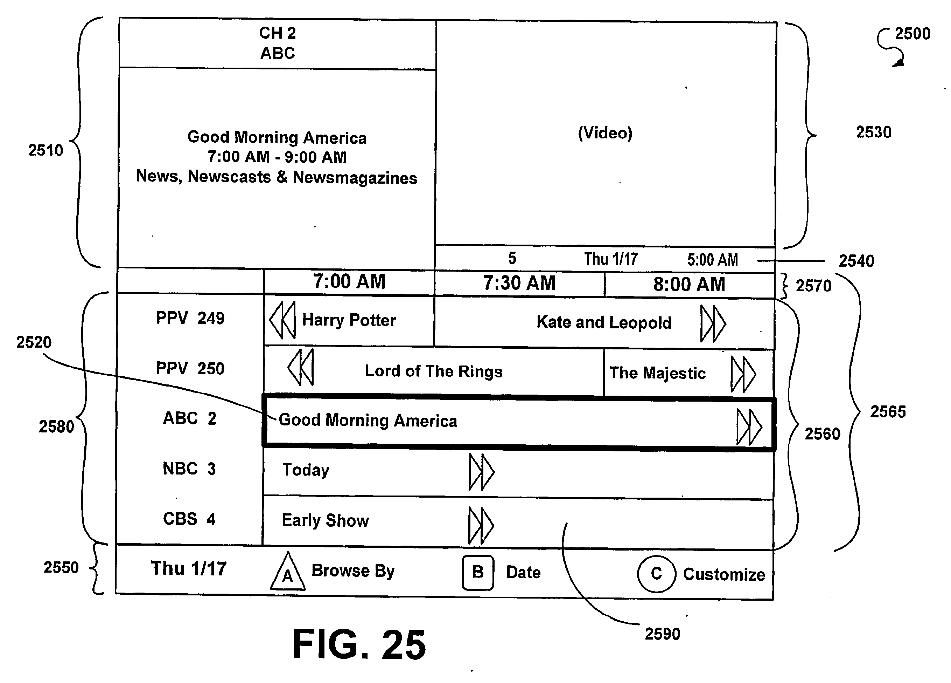

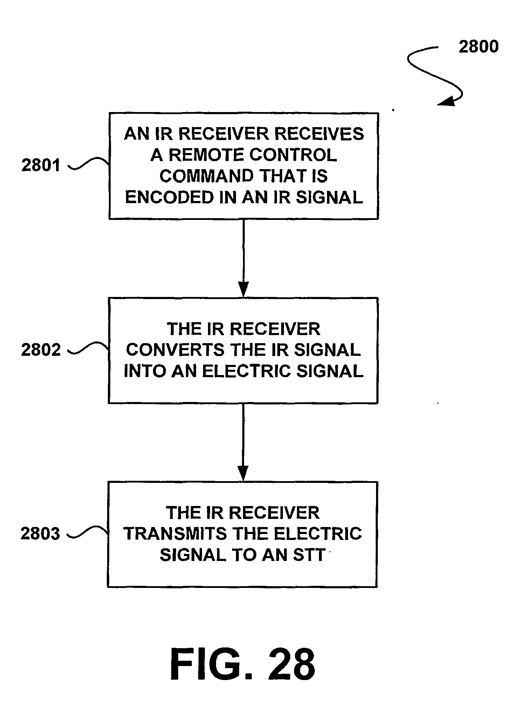

Preferred embodiments of the invention can be understood in the context of a subscriber television system. In the description that follows, FIG. 1 will provide an example of a subscriber television system in which an embodiment of the invention may be implemented. FIGS. 2-24 provide examples of system components that can be used to help implement embodiments of the invention. Examples of user interface screens that may be provided by an STT are provided in FIGS. 25-27. Finally, FIGS. 28-35 depict examples of methods according to embodiments of the invention. Note, however, that the invention may be embodied in many different forms and should not be construed as limited to the embodiments set forth herein. Furthermore, all examples given herein are intended to be non-limiting, and are provided in order to help clarify the description of the invention.

FIG. 1 is a simplified block diagram depicting a non-limiting example of a subscriber television system 100. In this example, the subscriber television system 100 includes a headend 110 that is coupled to a local television network (LTN) 101 via a communications network (CN) 130. The CN 130 may be any network that is suitable for transmitting television signals. The CN 130 may be, for example, a hybrid fiber coax (HFC) network or a satellite communications network, among others.

The LTN 101, which is typically situated at a customer premises, includes a set-top terminal (STT) 200 that provides television services to the TVs 140-1 and 140-2, and, optionally, to additional TVs including, for example, TV 140-3. The STT 200 may be coupled to the TV 140-1 via a connection 111 (e.g., a coaxial cable), and may be coupled to the TV 140-2 and/or to the 140-3 either directly or via one or more other devices, as discussed further below. The customer premises may be a residence or a place of business for one or more STT users. The STT 200 may be a stand-alone unit or may be integrated into another device such as, for example, a television. In one preferred embodiment, the TV 140-1 is located in the same room as a stand-alone STT 200, whereas the TVs 140-2 and 140-3 are located in different rooms than where the STT 200 is located.

The headend 110 may include one or more server devices (not shown) for providing video, audio, and other data to the STT 200 via the CN 130. The headend 110 and the STT 200 cooperate to provide a user with television services via the TVs 140-i (*e.g*., 140-1, 140-2, and/or 140-3). The television services may include, for example, broadcast television services, video-on-demand (VOD) services, and/or pay-per-view (PPV) services, among others. Each broadcast television service typically provides a sequence of television presentations corresponding to a television station (*e.g*., ABC, NBC, CBS, or CNN, among others) and is typically identified by a channel number (*e.g*., channel 2, channel 3, channel 4, etc.). A television service (*e.g*., the CNN Headline News channel) that is identified by a certain channel number (*e.g*., channel 36) to viewers served by a first television service provider may be identified by another channel number (*e.g*., channel 45) to viewers served by a second television service provider. Depending on a desired implementation, a television service signal that is transmitted by the STT 200 to a TV 140-i may be received and/or processed by one or more intermediary devices (*e.g*., a splitter, a radio frequency (RF) converter, and/or another STT (not shown in FIG. 1)) before being forwarded to a TV 140-i.

FIG. 2 is a simplified block diagram illustrating selected components of an STT 200, according to one embodiment of the invention. In other embodiments, an STT 200 may include only some of the components shown in FIG. 2, in addition to other components that are not shown in FIG. 2 . The STT 200 has electronic components (*e.g*., processor 224, memory 230, etc.) that are coupled to a local interface 210, which can include, for example, one or more buses or other wired or wireless connections. The processor 224 is a hardware device for executing software, particularly that stored in memory 230. The processor 224 can be a custom-made or commercially available processor for executing software instructions. When the STT 200 is in operation, the processor 224 is configured to execute software stored within the memory 230, to communicate data to and from the memory 230, and to generally control operations of the STT 200 pursuant to the software.

The memory system 230 may include any one or combination of volatile memory elements (*e.g*., random access memory (RAM), dynamic RAM (DRAM), static RAM (SRAM), synchronous DRAM (SDRAM), magnetic RAM (MRAM), *etc.)* and nonvolatile memory elements (*e.g*., read only memory (ROM), hard drive, tape, compact disk ROM (CD-ROM), *etc*.). Moreover, the memory system 230 may incorporate electronic, magnetic, optical, and/or other types of storage media. Note that the memory system 230 can have a distributed architecture, where various memory components are situated remotely from one another, but can be accessed by the processor 224.

The software in memory 230 may include one or more separate programs, each of which comprises executable instructions for implementing logical functions. In the example of FIG. 2, the software in the memory 230 includes an operating system (OS) 231, a WatchTV application 234, a navigator application 235, a personal video recorder (PVR) application 236, a driver 232, a video-on-demand (VOD) application 233, and an interactive program guide (IPG) application 237, among others. The OS 231 controls the execution of other software and provides management and control services including, for example, scheduling, input-output control, file and data management, memory management, and communication control, among others. The WatchTV application 234 is used to help provide a user with a requested broadcast television service. The IPG application 237 provides an interactive program guide that includes listings of television services (which are typically listed as television channels) provided by the STT 200. The navigator 235 is used to route user input commands to respective software applications that have registered with the navigator 235 to receive the respective commands. The VOD application 233 provides a user with video-on-demand presentations such as, for example, movies that are selected via an on-screen movie catalog. The PVR application 236 may provide user interface (UI) screens that can be used to manage (*e.g*., record and delete) the content of a storage device 250. The PVR application 236 may record or delete data from the storage device 250 with the help of a software driver 232 which controls read and write operations performed on the storage device 250. In one preferred embodiment, the storage device 250 includes a hard drive that reads from and writes to a hard disk.

Each of the above mentioned applications comprises executable instructions for implementing logical functions and can be embodied in any computer-readable medium for use by or in connection with an instruction execution system, apparatus, or device, such as a computer-based system, processor-containing system, or other system that can fetch and execute the instructions. Other software applications may be included in memory 230 but are omitted from FIG. 2 to simplify the illustration of the STT 200.

The tuner system 225 includes, in one implementation, an out-of-band tuner (not shown) for receiving out-of-band signals (e.g., that were modulated using quadrature phase shift keying (QPSK)), and in-band tuners 223-1 and 223-2 (e.g., quadrature amplitude modulation (QAM)/analog tuners) for receiving analog and/or digital in-band television services. Alternatively, the tuner system 225 may only include one in-band tuner, depending on a desired implementation. The signal processing system 220 may be capable of demodulating, demultiplexing, and decoding signals that are tuned to by the tuner system 225. Although shown as one module, the signal processing system may comprise multiple modules that are located in different parts of the STT 200.

The STT 200 also includes an upstream transmitter 227 and a local transmitter 229 that, in one embodiment, are used to transmit data via the communications interface 222. The upstream transmitter 227, which may alternatively be included in the tuner system 225, preferably includes a QPSK modulator that is used to transmit upstream data to the headend 110. The local transmitter 229 preferably includes a UHF modulator for modulating a television service that is output to the TV 140-2 and/or to the TV 140-3 (FIG. 1) through an optional communication interface 221 and/or through communication interface 222, depending on a desired implementation.

The STT 200 also includes an IR receiver 226, a remote control signal detector 201 and/or an RF receiver 242, which detect respective signals (IR, electric, or wireless RF) having encoded remote control commands requesting television services or STT functionality. In one embodiment, the remote control signal detector 201 may be configured to detect on-off keying (OOK) encoded signals. Remote control commands that are detected by the IR receiver 226, the detector 201, or RF receiver 242 may be forwarded to the navigator application 235, which then routs the commands to respective applications. In some embodiments, the STT 200 includes either the remote control signal detector 201 or the RF receiver 242, but not both. A remote control command may be associated with a certain remote control device (and hence with a certain television 140-i) based on the type of signal received (e.g., IR, electric, or wireless RF), based on information (e.g., a code) contained in the remote control command, and/or based on a frequency at which the remote control command is modulated.

The output system 228 is used to encode television services that are to be output to the TV 140-1 via a connection 111. The output system 228 may provide the TV 140-1 with signals that are in, for example, NTSC (National Television Standard Committee) format. In another embodiment, if the TV 140-1 is a digital television (*e.g*., a high definition television (HDTV)), then the output system may include an MPEG (Motion Picture Experts Group) encoder for encoding television service signals in an MPEG-2 format. The STT 200 may also provide television services to other TV sets located at the customer premises via the embodiments described below.

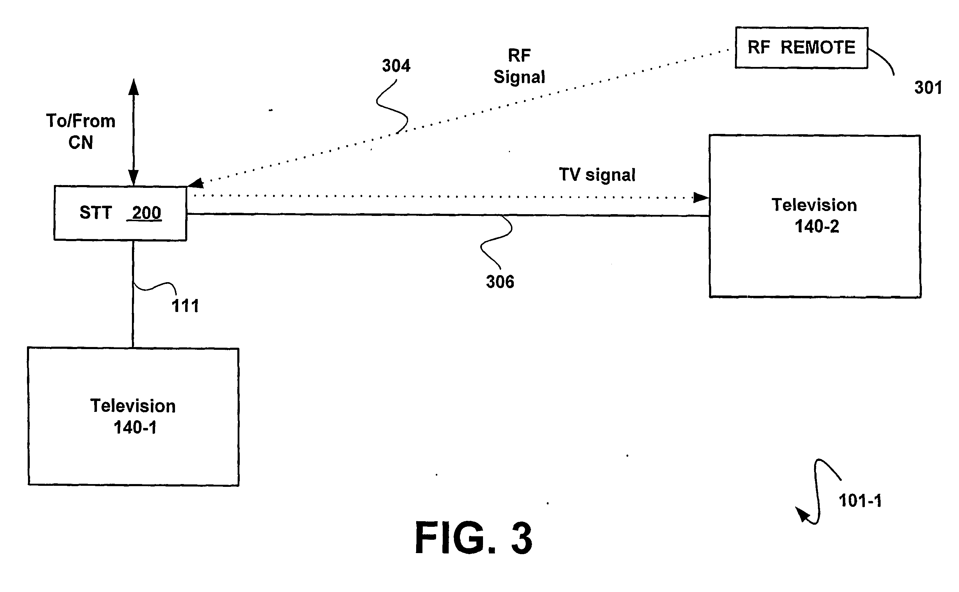

FIG. 3 is a simplified block diagram depicting an LTN 101-1 that represents an embodiment of the LTN 101 shown in FIG. 1. The LTN 101-1 includes an STT 200 that is coupled to TV 140-1 and to TV 140-2. The TV 140-1 is preferably located in the same room as the STT 200, whereas the TV 140-2 is preferably located in a different room. A viewer of the TV 140-1 may request a television service from the STT 200 by using, for example, an IR remote control device (not shown in FIG. 3). A viewer of the TV 140-2, on the other hand, may request a television service from the STT 200 by using, for example, an RF remote control device 301.

The remote control device 301 may provide a request for a certain television service via a wireless RF signal 304. In response to receiving the wireless RF signal 304, the STT 200 (e.g., based on instructions contained in the WatchTV application 234) modulates the requested television service signal at a frequency corresponding to a predetermined television channel (*e.g*., channel 4) and then outputs the modulated television service signal via a connection 306, which may be, for example, a coaxial cable. The TV 140-2, which may be tuned to the pre-determined television channel (*e.g*., channel 4), receives and displays the requested television service.

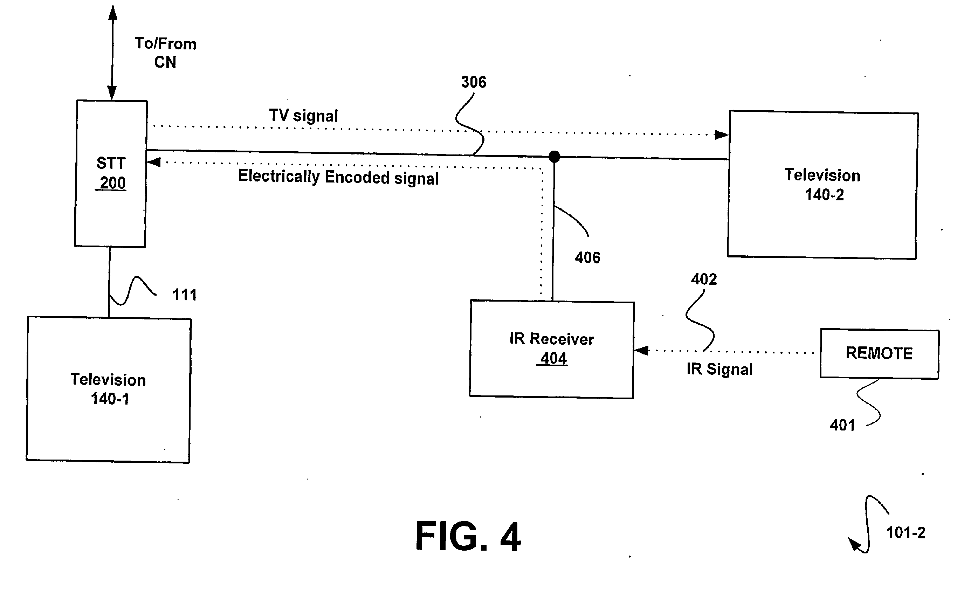

FIG. 4 is a simplified block diagram depicting an LTN 101-2 that represents another embodiment of the LTN 101 shown in FIG. 1. The LTN 101-2 includes an STT 200 that is coupled to a first TV 140-1 and to a second TV 140-2. An IR remote control device 401 may provide a request for a certain television service via an IR signal 402. An IR receiver 404 receives the IR signal 402, encodes it as an electric signal, and then passes the electric signal on to the STT 200 via a connection 406. In response to receiving the electric signal, the STT 200 modulates the requested television service signal at a frequency corresponding to a predetermined television channel (*e.g*., channel 4) and then outputs the modulated television service signal via the connection 306. The TV 140-2, which may be tuned to the pre-determined television channel (*e.g*., channel 4), receives and displays the requested television service.

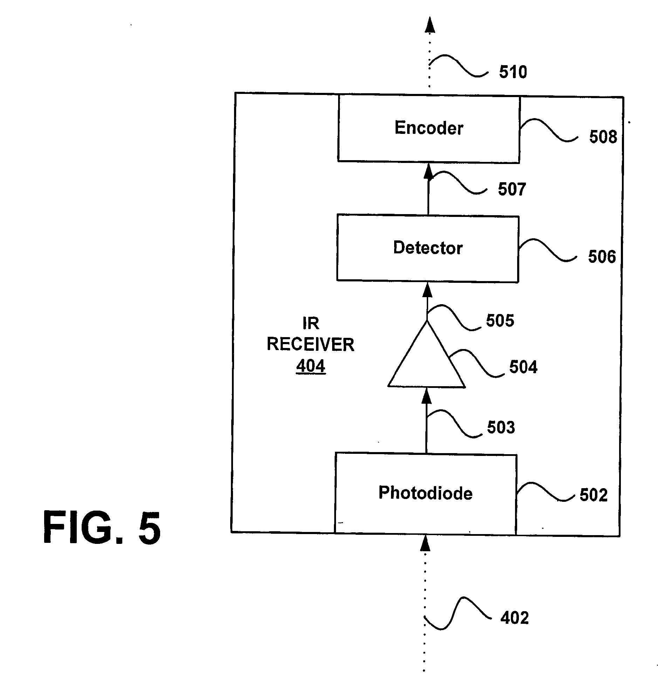

FIG. 5 is a simplified block diagram depicting selected components of an IR receiver 404, according to one embodiment. The IR receiver 404 receives a user input command that is encoded in an IR signal 402 (FIG. 4), encodes the command in an electric signal, and then transmits the electric signal to the STT 200 (FIG. 4). The IR receiver 404 may include, for example, a photodiode 502 for converting the IR signal into an electric signal, an amplifier 504 for amplifying the output 503 of the photodiode, a detector 506 (*e.g*., an on-off keying detector) for decoding the output 505 of the amplifier 504, and an encoder 508 (*e.g*., a Manchester encoder) for encoding the output 507 of the detector 506. The output 510 of the encoder 508 is transmitted to the STT 200, where it may be detected by a remote control signal detector (*e.g*., detector 201 shown in FIG. 2). Other elements and operation of the IR receiver 404 would be understood by those of ordinary skill in the art.

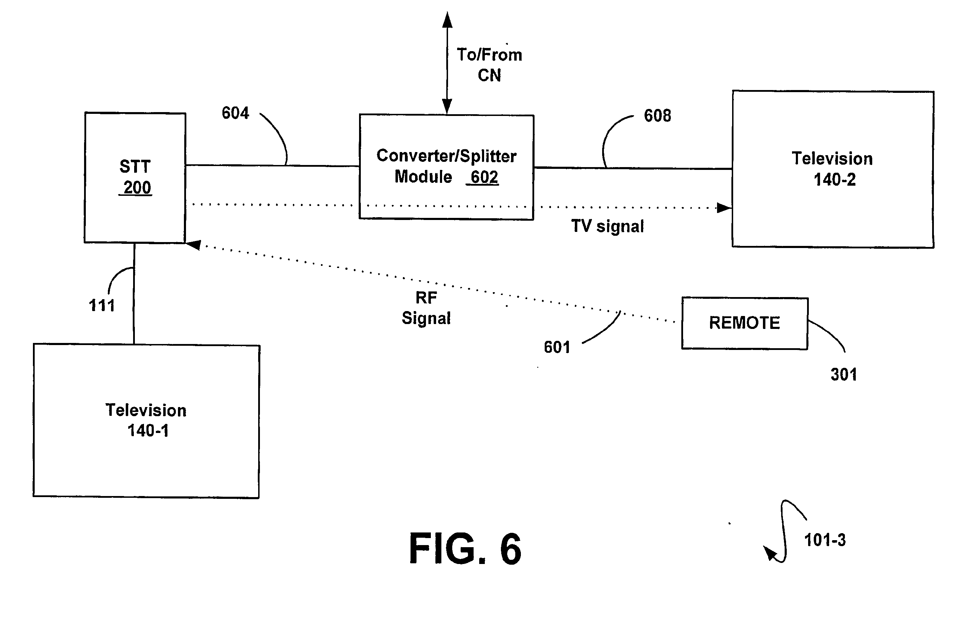

FIG. 6 is a simplified block diagram depicting an LTN 101-3 that represents a further embodiment of the LTN 101 shown in FIG. 1. The LTN 101-3 includes an STT 200 that is connected to a TV 140-1 and to a converter/splitter module 602. The STT 200 receives a request for a certain television service, such as via a wireless radio frequency (RF) signal 601 that is provided by a wireless RF remote control device 301, for example. In response to the request, the STT 200 outputs a television service signal that is modulated at an ultra high frequency (UHF) onto a connection 604. The converter/splitter module 602 receives the UHF television service signal from the STT 200 and converts the frequency of the television service signal into a frequency that corresponds to a predetermined television channel. The converter/splitter module 602 then transmits the television service signal to the TV 140-2 via a connection 608. The TV 140-2 receives the television service signal and presents it content to a user.

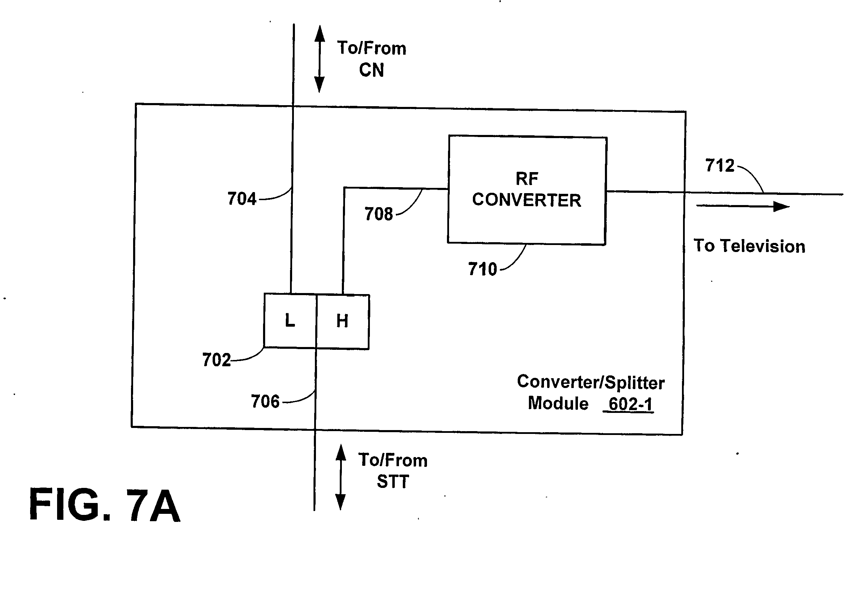

FIG. 7A is a simplified block diagram depicting a converter/splitter module 602-1 that represents one embodiment of the converter/splitter module 602 shown in FIG. 6. The converter/splitter module 602-1 includes a diplexer 702 that receives signals from the CN 130 (FIG. 1) via a connection 704 and that passes the signals from the CN 130 to the STT 200 (FIG. 1) via a connection 706. The diplexer 702 also receives low frequency out-of-band signals and UHF modulated television service signals from the STT 200. The diplexer 702 passes the low frequency out-of-band signals to the CN 130 via connection 704, and passes the UHF television service signals to the RF converter 710 via a connection 708. The RF converter 710 converts the frequency of the UHF television service signals received from the diplexer 702 into a frequency that corresponds to a predetermined television channel and passes the television service signals on to the TV 140-2 via a connection 712.

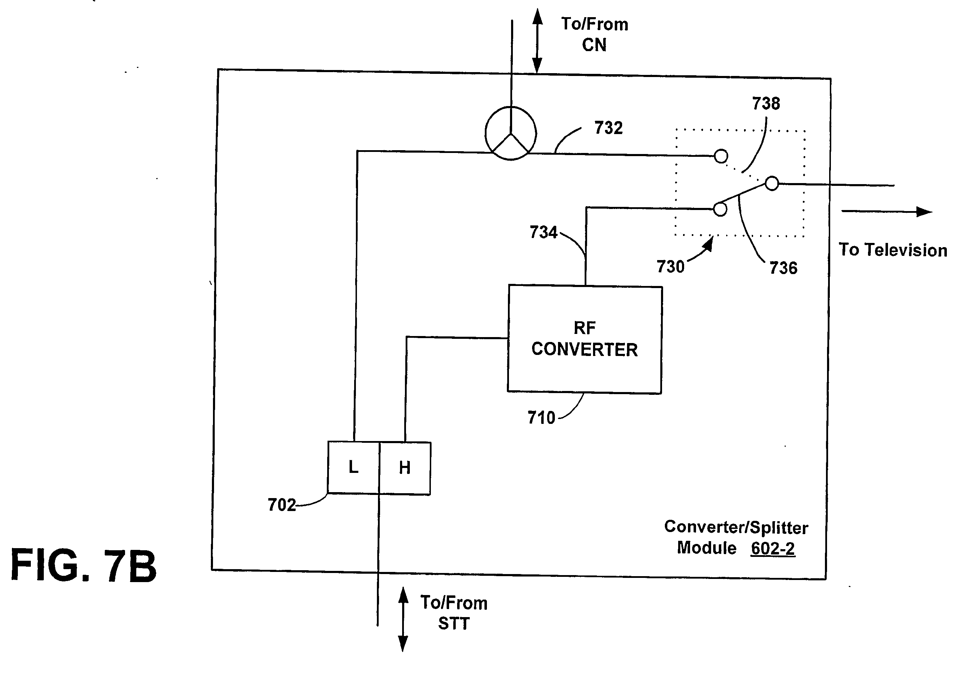

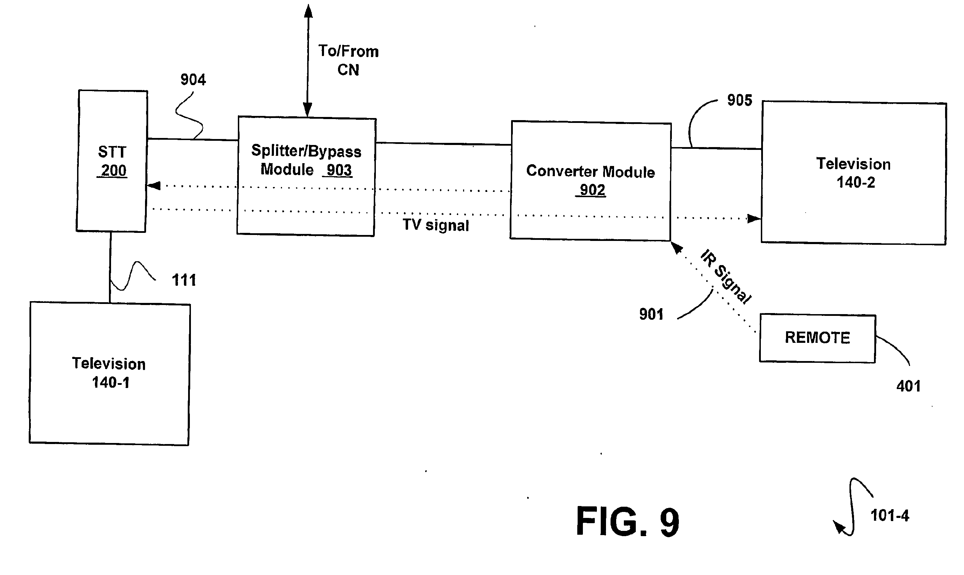

FIG. 7B is a simplified block diagram depicting a converter/splitter module 602-2 that represents another embodiment of the converter/splitter module 602 shown in FIG. 6. The converter/splitter module 602-2 includes a switch 730 that affects the source of the television service signals provided to the TV 140-2 (FIG. 9). When the switch 730 is in a first state 736, then the converter/splitter module 602-2 provides the TV 140-2 with television services that are received by the converter/splitter module 602-2 from the STT 200 (FIG. 6). However, when the switch 730 is in a second state 738, then the converter/splitter module 602-2 provides the TV 140-2 with a broadband signal that is received by the converter/splitter module 602-2 from the headend 110 via the CN 130 (FIG. 1). The switch 730 may be configured to be in the second state 738 in response to the STT 200 being powered off. In this manner, the TV 140-2 may still be able to receive certain television services via a broadband signal that is forwarded to the TV 140-2 by the converter/splitter module 602-2 in the event that the STT 200 is unable to provide the TV 140-2 with television services.

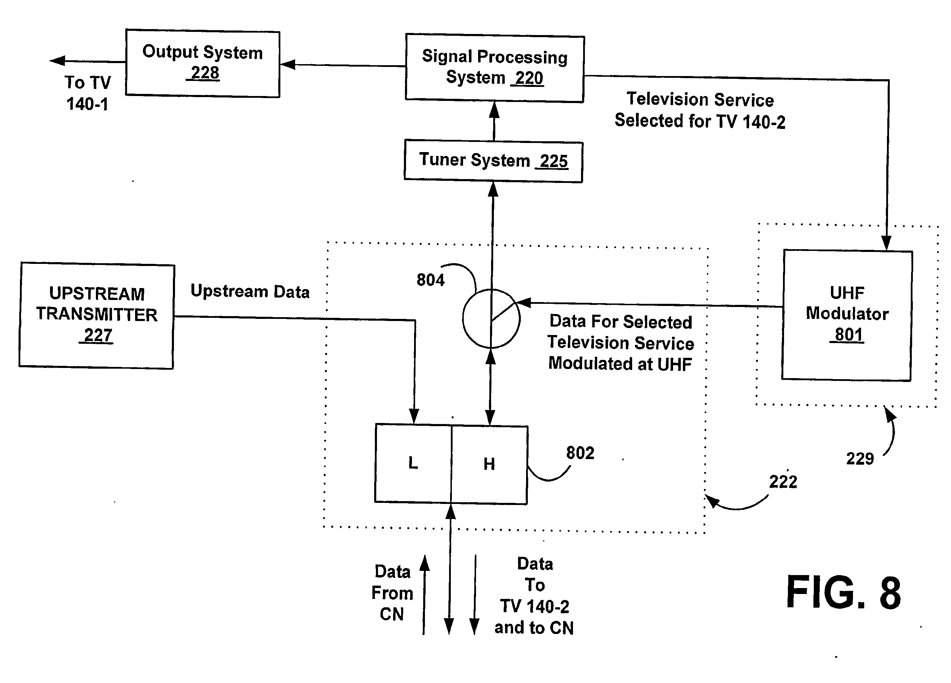

FIG. 8 is a simplified block diagram illustrating one embodiment of selected data flows in an STT 200 that is configured to transmit a plurality of television services to a plurality of respective televisions. As shown in FIG. 8, the communications interface 222 includes a diplexer 802 and a directional coupler 804. The diplexer 802 receives television service signals that were transmitted by the headend 110 via the CN 130 (FIG. 1) and passes the television service signals to a tuner system 225 via a directional coupler 804.

The tuner system 225, which in the embodiment illustrated in FIG. 8 preferably comprises at least two in-band tuners, extracts television service signals that are to be displayed by the TVs 140-1 and 140-2, respectively. The tuner system 225 then forwards the television service signals to the signal processing system 220, which demodulates and decodes the television service signals. The signal processing system 220 then forwards to the output system 228 a television service signal corresponding to a first television service that was selected for the TV 140-1, and forwards to the local transmitter 229 a television service signal corresponding to a second television service that was selected for the TV 140-2.

The local transmitter 229 includes a UHF modulator 801 which modulates the television service signal corresponding to the second television service at a UHF frequency. In one implementation, the UHF modulator 801 modulates the television service signal at a certain UHF frequency (*e.g*., about 1 GHz) that is above the highest frequency (*e.g*., 860 MHz) used to transmit television service signals from the headend 110 (FIG. 1) to the STT 200. The modulated television service signal may then be transmitted to the TV 140-2 via the directional coupler 804 and diplexer 802 of the communications interface 222.

FIG. 9 is a simplified block diagram depicting an LTN 101-4 that represents an embodiment of the LTN 101 shown in FIG. 1. The local television network 101 includes an STT 200 that is connected to a TV 140-1 and to a splitter/bypass module 903. A remote control device 401 may be used to provide a request for a certain television service via an infra-red (IR) signal 901. The converter module 902, which is preferably located in the same room as the TV 140-2, receives the IR signal 901, converts it into an electric signal, and forwards it to the STT 200 via the splitter/bypass module 903. The STT 200 receives the request for the television service and outputs a television service signal that is modulated at an ultra high frequency (UHF) onto the connection 904. The splitter/bypass module 903 receives the UHF modulated television service signal from the STT 200 and forwards the television service signal to the converter module 902. Upon receiving the UHF television service signal, the converter module 902 converts the frequency of the television service signal into a frequency that corresponds to a predetermined television channel. The TV 140-2 receives the television service signal from the converter module 902 and displays its video content to a viewer.

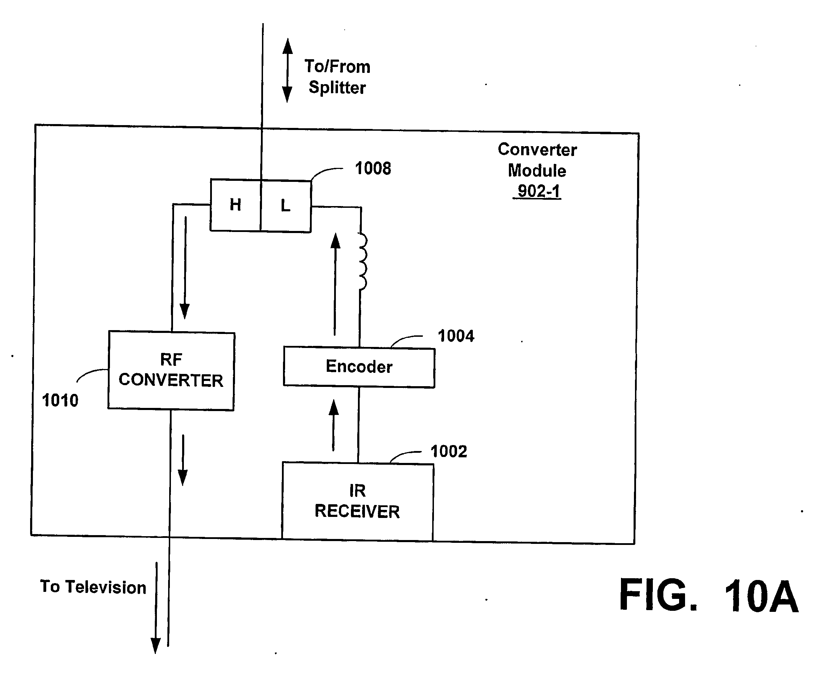

FIG. 10A is a simplified block diagram depicting a converter module 902-1 that represents one embodiment of the converter module 902 shown in FIG. 9. The converter module 902-1 includes an IR receiver 1002 for receiving an IR signal from a remote control device 401 (FIG. 9). The IR receiver 1002 may include, for example, a photodiode for converting the IR signal into an electric signal, an amplifier for amplifying the output of the photodiode, and an on-off keying detector for decoding the output of the amplifier. The IR receiver 1002 passes the electric signal on to an encoder 1004 (*e.g*., a Manchester encoder) that encodes the signal and forwards it to a diplexer 1008. The encoded signal is then passed by the diplexer 1008 to the splitter/bypass module 903 (FIG. 9).

The diplexer 1008 also receives a UHF television service signal from the splitter/bypass module 903 and passes the signal to the RF converter 1010. The RF converter 1010 converts the frequency of the UHF television service signal into a frequency that corresponds to a predetermined television channel (*e.g*., channel 4) and then passes the television service signal on to the TV 140-2 (FIG. 9).

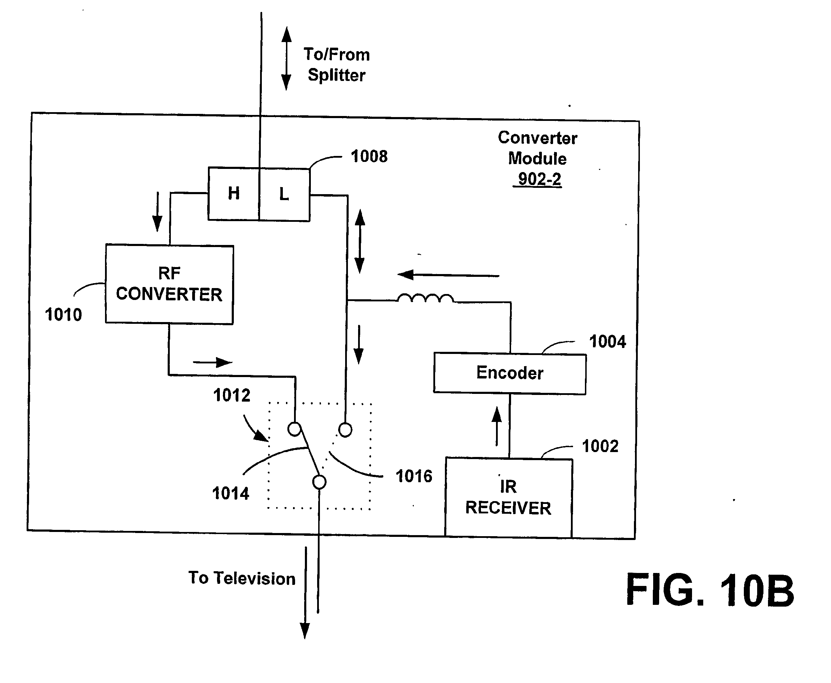

FIG. 10B is a simplified block diagram depicting a converter module 902-2 that represents another embodiment of the converter module 902 shown in FIG. 9. As shown in FIG. 10B, the converter module 902-2 includes a switch 1012 that affects the source of the television service signal that is provided to the TV 140-2 (FIG. 9). When the switch 1012 is in a first state 1014, then the converter module 902-2 provides the TV 140-2 with a television service that is provided by the STT 200 (FIG. 9) and modified by the RF converter 1010. However, when the switch 1012 is in a second state 1016, then the converter module 902-2 provides the TV 140-2 with a broadband signal that is received from the headend 110 (FIG. 1). The switch 1012 may be configured to be in the second state 1016 in response to the STT 200 being powered off. In this manner, the TV 140-2 may still be able to receive certain television services via a broadband signal that is forwarded to the TV 140-2 by the converter module 902-2 in the event that the STT 200 is unable to provide the TV 140-2 with television services.

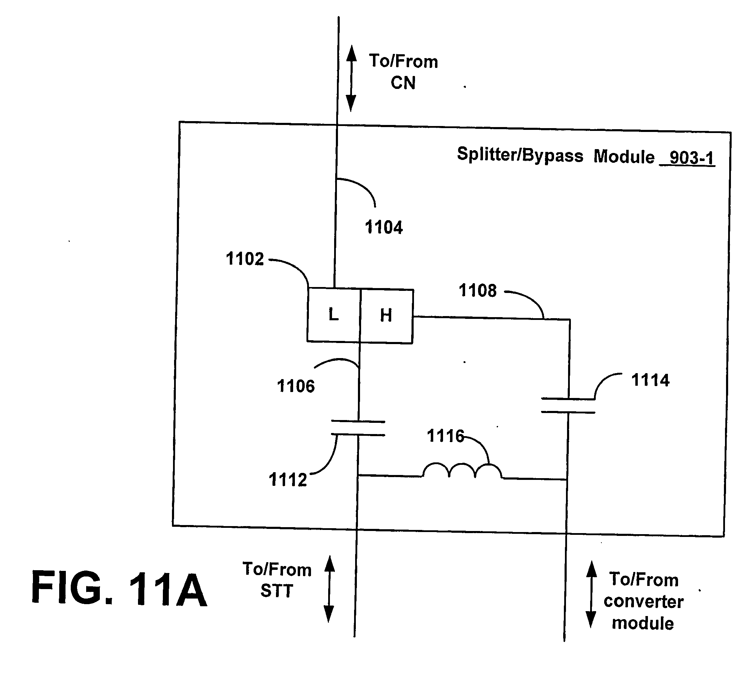

FIG. 11A is a simplified block diagram depicting a splitter/bypass module 903-1 that represents one embodiment of the splitter/bypass module 903 shown in FIG. 9. The splitter/bypass module 903-1 includes a diplexer 1102 that receives signals from the CN 130 (FIG. 1) via a connection 1104, and that passes the signals to the STT 200 (FIG. 1) via a connection 1106. The diplexer 1102 also receives low frequency out-of-band signals and UHF television service signals from the STT 200. The diplexer 1102 passes the low frequency out-of-band signals received from the STT 200 to the CN 130 via connection 1104, and passes the UHF television service signals to the converter module 902 (FIG. 9) via a connection 1108. The converter module 902 converts the frequency of a UHF television service signal received from the diplexer 1102 into a frequency that corresponds to a predetermined television channel (*e.g*., television channel 4) and passes the television service signal on to the TV 140-2. Capacitors 1112 and 1114 may be used to block direct current from affecting the performance of the diplexer 1102. An electric signal that contains data provided by a remote control signal may be received from the converter module 902 and then passed to the STT 200 via an inductor 1116.

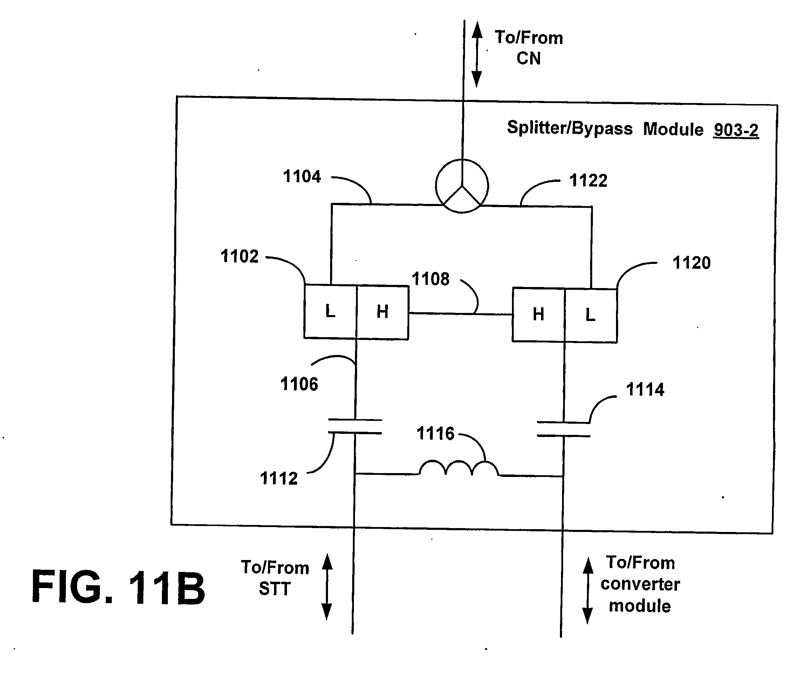

FIG. 11B is a simplified block diagram depicting a splitter/bypass module 903-2 that represents another embodiment of the splitter/bypass module 903 shown in FIG. 9. The splitter/bypass module 903-2 includes a diplexer 1102 that receives low frequency out-of-band signals and UHF television service signals from the STT 200 (FIG. 9). The diplexer 1102 passes the low frequency out-of-band signals to the CN 130 via a connection 1104, and passes the UHF television service signals to another diplexer 1120 via another connection 1108.

The diplexer 1120 passes the UHF television service signals received from the diplexer 1102 to the converter module 902 (FIG. 9). The diplexer 1120 also passes a broadband signal received from the CN 130 (FIG. 1) to the converter module 902. Capacitors 1112 and 1114 may be used to block direct currents from negatively impacting the performance of the diplexers 1102 and 1120. An electric signal that contains data provided by a remote control signal may be received from the converter module 902 and passed to the STT 200 via an inductor 1116.

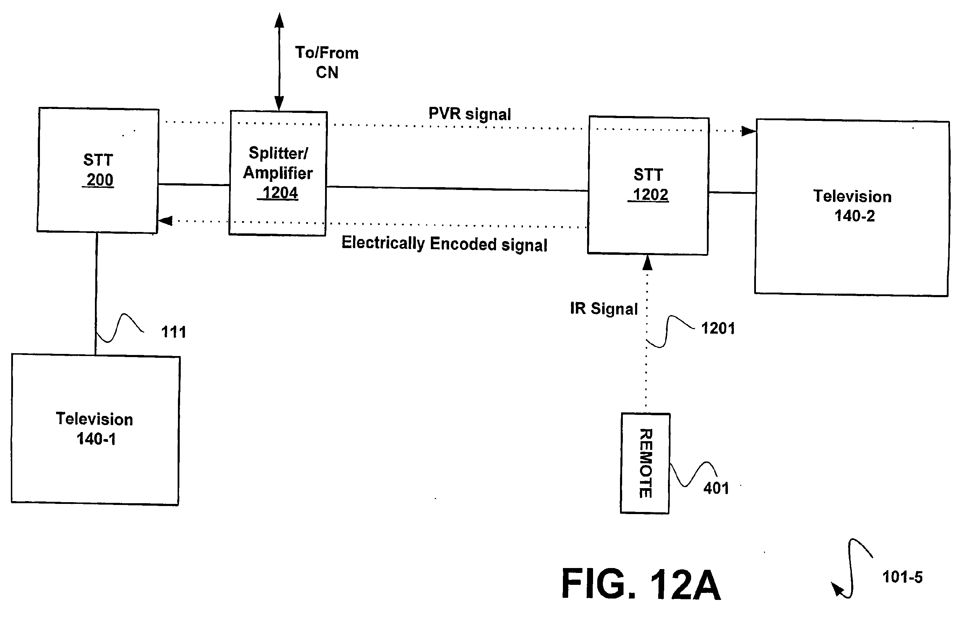

Reference is now directed to FIGS. 12A-12C which depict respective LTNs in which an STT 200 provides an STT 1202 with video data that is stored at the STT 200. The STT 200 preferably has more resources than the STT 1202 including for example, one or more hard disks for storing television presentations and a plurality of in-band tuners for enabling the simultaneous provision of television services to the television 140-1 and to the STT 1202. The STT 1202, on the other hand, may have a single in-band tuner and no hard disks for storing television presentations. Therefore, the STT 1202 may be significantly less costly than the STT 200, but may nevertheless be able to provide a viewer of the television 140-2 with many, if not all, of the functionality that the STT 200 is capable of providing to a viewer of the television 140-1.

FIG. 12A is a simplified block diagram depicting an LTN 101-5 that represents an embodiment of the LTN 101 shown in FIG. 1. The LTN 101-5 includes a splitter/amplifier module 1204 that is connected to a first STT 200 and to a second STT 1202. The STTs 200 and 1202 are connected to the TVs 140-1 and 140-2, respectively. The splitter/amplifier module 1204 receives broadband data from the CN 130 and passes the broadband data on to the STT 200 and to the STT 1202.

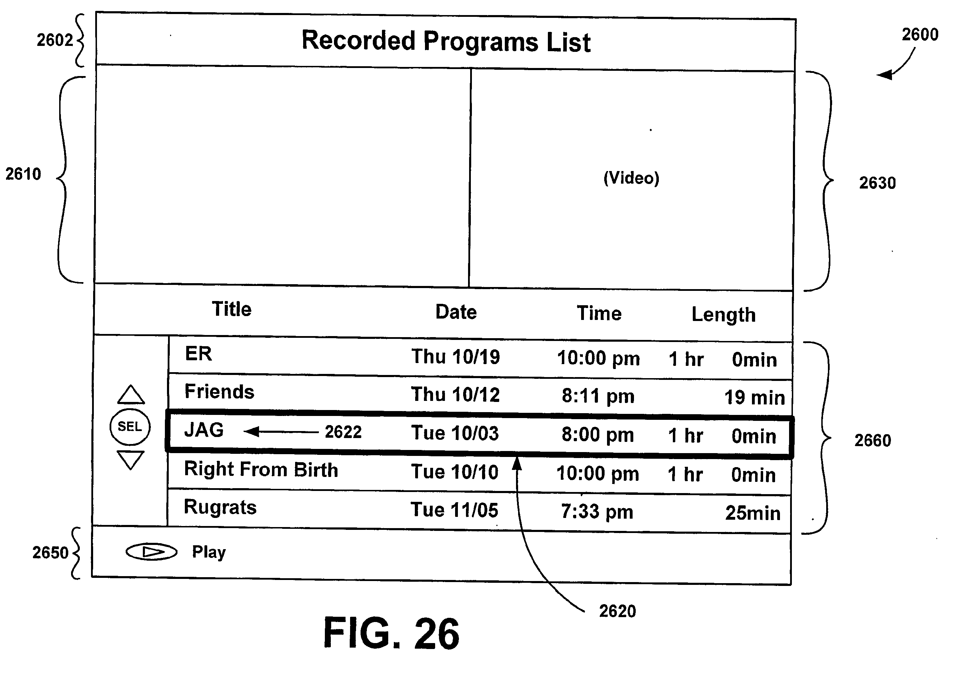

A viewer of TV 140-2 may use a remote control device 401 to a request a television presentation that is stored in the STT 200. The request for the television presentation may be provided pursuant to options listed in a graphical user interface (GUI) such as, for example, among others, a GUI that is configured similarly to the Recorded Programs List 2600 depicted in FIG. 26. The remote device 401 may be used to request the television presentation by outputting an IR signal 1201 that is received by the STT 1202. The STT 1202 converts the IR signal 1201 into an electric signal, and then transmits the electric signal to the splitter/amplifier module 1204. The splitter/amplifier module 1204 passes the electric signal on to the STT 200. In response to receiving the electric signal, the STT 200 transmits the requested television presentation to the STT 1202 via the splitter/amplifier 1204. The television presentation is received by the STT 1202, where it is processed (*e.g*., demodulated and decoded) and then provided to the TV 140-2 for presentation to the viewer.

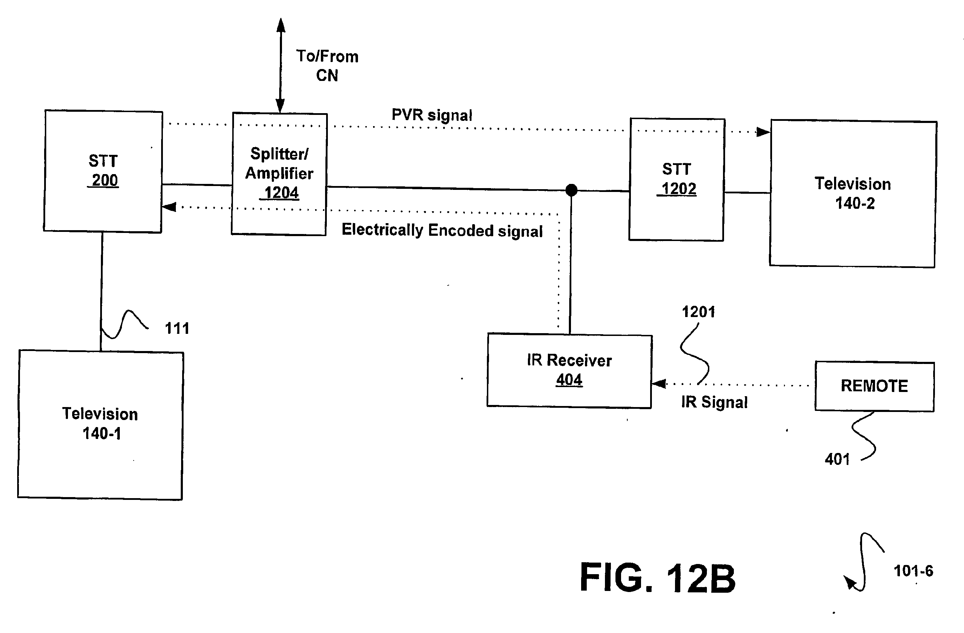

FIG. 12B is a simplified block diagram depicting an LTN 101-6 that represents an alternative embodiment of the LTN 101-5 (FIG. 12A). A remote control device 401 may be used by a viewer of TV 140-2 to request a television presentation that is stored in a storage device within the STT 200. The remote device 401 may request such television presentation by outputting an IR signal 1201 that is received by the IR receiver 404. The IR receiver 404 converts the IR signal 1201 into an electric signal, and then transmits the electric signal to the splitter/amplifier module 1204. The splitter/amplifier module 1204 passes the electric signal on to the STT 200. In response to receiving the electric signal, the STT 200 transmits the requested television presentation to the STT'1202 via the splitter/amplifier 1204. The STT 1202 receives the television presentation and provides it to the TV 140-2, which displays it to the viewer.

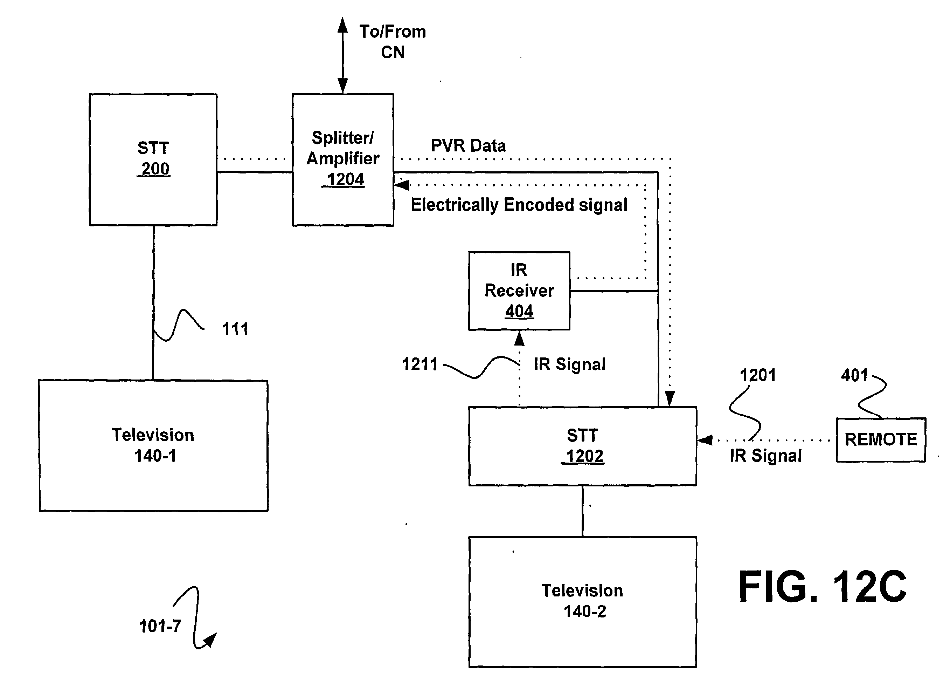

FIG. 12C is a simplified block diagram depicting an LTN 101-7 that represents another alternative embodiment of the LTN 101-5 (FIG. 12A). The LTN 101-7 includes a splitter/amplifier module 1204 that is coupled to a first STT 200 and to a second STT 1202. The STTs 200 and 1202 are coupled to the TVs 140-1 and 140-2, respectively. The splitter/amplifier module 1204 receives a broadband signal via the CN 130 and passes the broadband signal on to the STT 200 and to the STT 1202.

A viewer of TV 140-2 may use a remote control device 401 to a request a television presentation that is stored in the STT 200. The remote device 401 may be used to request the television presentation by outputting an IR signal 1201 that is received by the STT 1202. In response to receiving the IR signal 1201, the STT 1202 outputs an IR signal 1211 that is intended to convey the command encoded in the IR signal 1201. Therefore, in one embodiment, the IR signal 1211 includes the data contained in the IR signal 1201.

The IR signal 1211 is received by the IR receiver 404, which is preferably, but not necessarily attached to the STT 1202. The IR receiver 404 receives the IR signal 1211, converts it into an electric signal (not shown), and then transmits the electric signal to the splitter/amplifier module 1204. The electric signal that is transmitted by the IR receiver 404 may be encoded using, for example, on-off keying (OOK) or Manchester encoding, among other encoding schemes.

The splitter/amplifier module 1204 receives the electric signal from the IR receiver 404, and passes the electric signal on to the STT 200. In response to receiving the electric signal, the STT 200 transmits the requested television presentation to the STT 1202 via the splitter/amplifier 1204. The television presentation is received by the STT 1202, where it is processed (*e.g*., demodulated and decoded) and then provided to the TV 140-2 for presentation to the viewer.

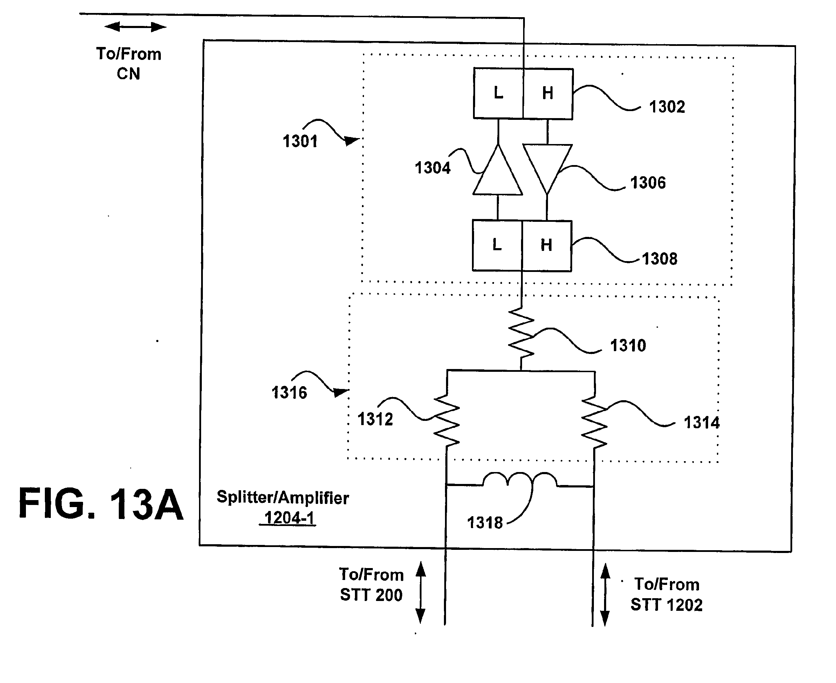

FIG. 13A is a simplified block diagram depicting a splitter/amplifier 1204-1 that represents one embodiment of the splitter/amplifier 1204 (FIG. 12B). The splitter/amplifier 1204-1 includes a signal amplification system 1301 that amplifies signals that are received from or transmitted to the headend 110 (FIG. 1). The signal amplification system includes amplifiers 1304 & 1306 that are connected between diplexers 1302 & 1308; downstream signals are amplified by the amplifier 1306, and upstream signals are amplified by the amplifier 1304.

A resistive splitter/combiner 1316 splits downstream signals so that they are received by both the STT 200 and the STT 1202 (FIG. 12B). The resistive splitter/combiner 1316 also combines upstream signals received from the STT 200 and the STT 1202 and passes them to the signal amplification system 1301. An electric signal that encodes a remote control command may be received from the IR receiver 404 (FIG. 12B) or from the STT 1202 (FIG. 12A), and passed to the STT 200 via an inductor 1318. A UHF modulated television presentation that is transmitted by the STT 200 to the STT 1202 passes through resistors 1312 and 1314 of the resistive splitter/combiner 1316.

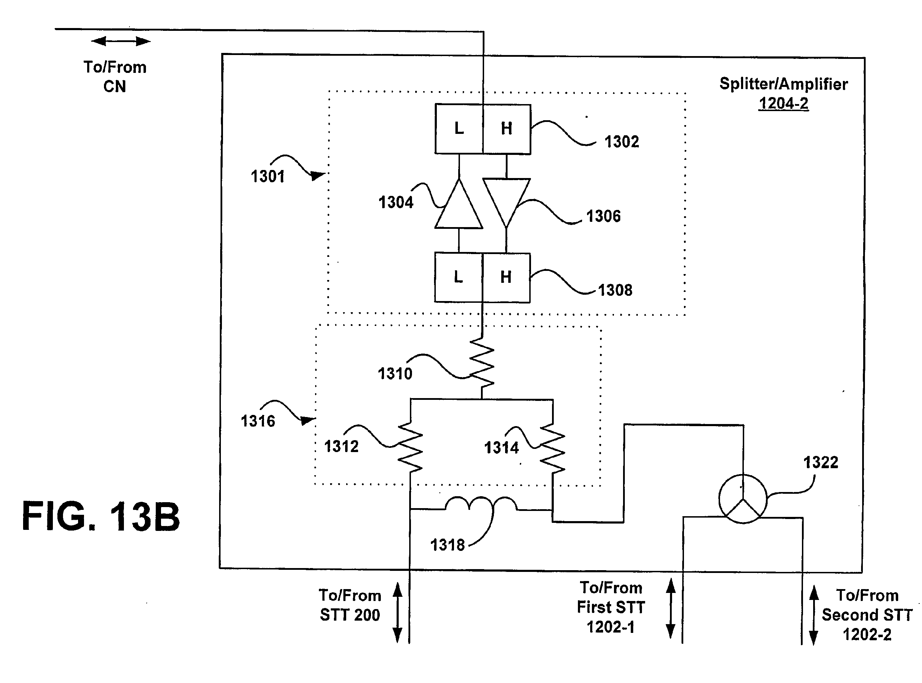

FIG. 13B is a simplified block diagram depicting a splitter/amplifier 1204-2 that represents another embodiment of the splitter/amplifier 1204 (FIGS. 12A & 12B). In addition to the signal amplification system 1301 and the resistive splitter/combiner 1316, the splitter/amplifier 1204-2 includes a splitter/combiner 1322 that allows two STTs 1202 (only one is shown in each of FIGS. 12B & 12A) to request and receive a television presentation from the STT 200. An electric signal that encodes a remote control command may be received by the splitter/combiner 1322 from the IR receiver 404 (FIG. 12B), from an STT 1202 (FIG. 12A), or from an IR receiver 404 (FIG. 12C) and passed to the STT 200 via an inductor 1318. A UHF modulated television presentation that is transmitted by the STT 200 to an STT 1202 passes through resistors 1312 and 1314 and through the splitter 1322 before reaching the STT 1202.

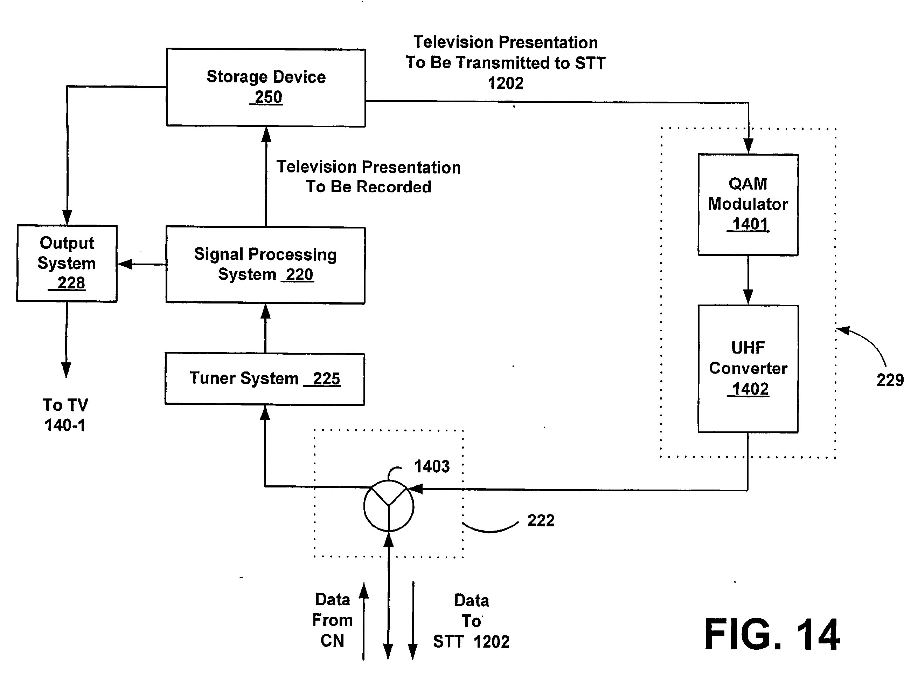

FIG. 14 is a simplified block diagram illustrating one embodiment of selected signal flows in an STT 200 that is configured to store and transmit television presentation signals to an STT 1202 (FIGS. 12A, 12B, and 12C). As shown in FIG. 14, the communications interface 222 includes a splitter/combiner 1403 which receives signals corresponding to television presentations that were transmitted by the headend 110 (FIG. 1) and passes the signals to a tuner system 225. The tuner system 225 extracts a signal corresponding to a television presentation that is to be recorded and forwards the extracted signal to the signal processing system 220 where the signal is demodulated and decoded. After being processed by the signal processing system 220, the signal corresponding to the television presentation that is to be recorded is then forwarded to the storage device 250 for storage. The signal may also be forwarded to the output system 228 (before and/or after the signal is stored in the storage device 250) which encodes the signal and transmits it to a TV 140-1 for presentation to a viewer.

When a television presentation that is stored in the storage device 250 is requested by a viewer of the TV 140-2, data corresponding to the television presentation is forwarded to the local transmitter 229. As shown in FIG. 14, the local transmitter 229 includes a Quadrature Amplitude Modulation (QAM) modulator 1401 and a UHF converter 1402. The data corresponding to a requested television presentation may be modulated by the QAM modulator 1401 using, for example, 64-QAM or 256-QAM modulation onto an intermediate frequency (IF). The frequency of the QAM modulated signal is preferably converted by the UHF converter 1402 to a frequency corresponding to the highest in-band channel (e.g., channel 134 at 855 MHz in some subscriber television systems), which is preferably not used by the headend to transmit data to the STT 200. Furthermore, a channel that is immediately below the highest in-band channel (e.g., channel 133) preferably also carries a QAM modulated signal to limit interference between the two adjacent channels. By using the highest in-band channel to transmit a television presentation to the STT 1202, an image of a signal that is output by the UHF converter 1402 would have a frequency that is above the frequency of the broadband signal that is received by the STT 1202, and would therefore not interfere with television services that are received by the STT 1202 from the headend 110 (FIG. 1). The modulated signal corresponding to the requested television presentation is transmitted by the UHF converter 1402 to the STT 1202 via the splitter/combiner 1403 and, depending on a desired implementation, via the splitter/amplifier module 1204 (FIGS. 12A-12C).

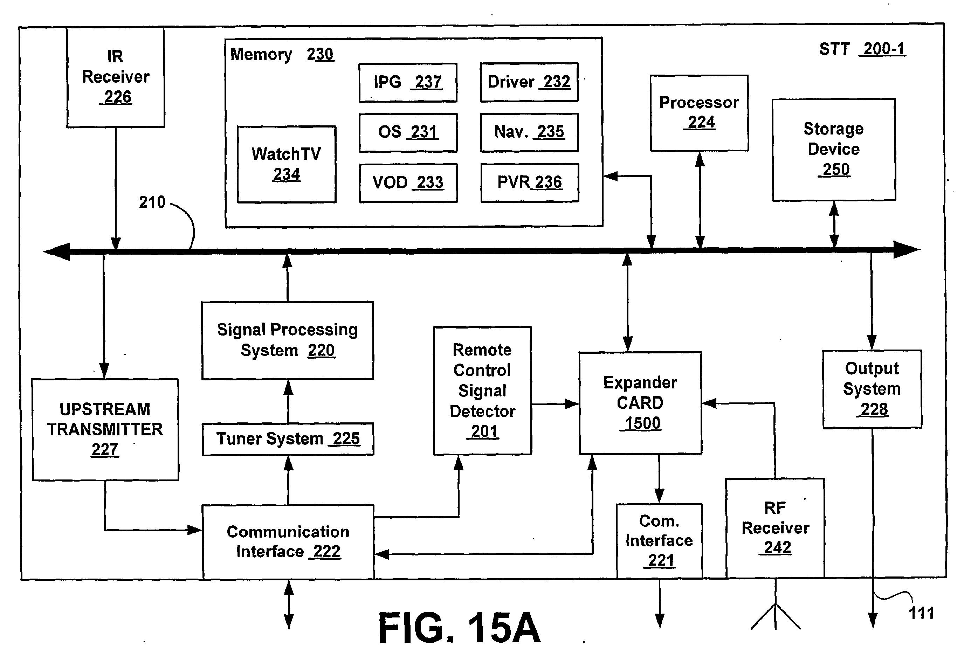

FIG. 15A is a simplified block diagram illustrating selected components of an STT 200-1 that represents an embodiment of the STT 200 shown in FIG. 1. The STT 200-1 includes an expander card 1500 in addition to components (*e.g*., processor 224, IR receiver 226, etc.) that may be the same or similar to components used in the STT 200 (FIG. 2). The expander card 1500, which is readily removable by a user of the STT 200, provides television presentations and/or other functionality (*e.g*., an interactive program guide) to the TV 140-2 (FIG. 1) via the communication interface 222, via the optional communication interface 221, or via some other wired or wireless interface (not shown), depending on a desired implementation. In one embodiment, the expander card 1500 may include one or more of the following electronic components (not shown in FIG. 15A), among others: a tuner system for tuning to a selected television service, a signal processing system for processing signals corresponding to the selected television service, memory for storing software, an analog and/or a digital encoder for transmitting the tuned television service to the TV 140-2, and/or a processor for controlling operation of the expander card 1500. The electronic components of the expander card 1500 may be integrated into a printed circuit board that is housed in a protective casing. The expander card 1500 may be configured to be easily connected to and disconnected from the STT 200-1 by a user of the STT 200-1.

The STT 200-1 may include a remote control signal detector 201 and/or an RF receiver 242, which detect respective signals (electric or wireless RF) that encode remote control commands requesting television services. Remote control commands that are detected by the detector 201 or receiver 242 may be forwarded to the expander card 1500. An STT 200 may also be configured to accommodate a plurality of expander cards for providing services to a plurality of respective television sets.

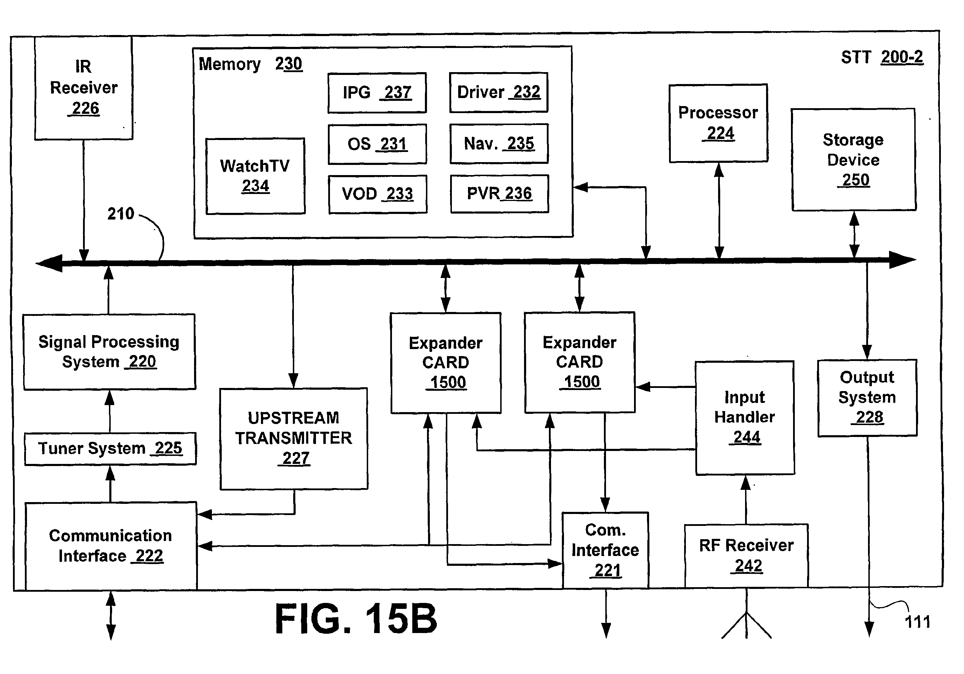

FIG. 15B is a simplified block diagram illustrating selected components of an STT 200-2 that represents another embodiment of the STT 200 shown in FIG. 1. The STT 200-2 includes expander cards 1500 in addition to components (e.g., processor 224, IR receiver 226, etc.) that may be the same or similar to components used in the STT 200 (FIG. 2). Each expander card 1500, which is readily removable by a user of the STT 200, provides television presentations and/or other functionality (*e.g*., an interactive program guide) to a respective television set via the communication interface 222, via the optional communication interface 221, or via some other wired or wireless interface (not shown), depending on a desired implementation.

An RF receiver 242 receives remote control commands encoded in wireless RF signals, encodes the commands into electric signals, and forwards the electric signals to a input handler 244. Alternatively, a signal detector (not shown) may detect remote control commands that are encoded in electric signals received via the communication interface 222. The input handler 244, which may be implemented as, for example, an application specific integrated circuit (ASIC) and/or as software residing in memory 230, forwards the remote control commands to respective expander cards 1500. Each remote control device corresponding to a television that is served by an expander card 1500 may be configured to output a distinguishing frequency or set of frequencies. In this manner, a remote control command may be forwarded to a respective expander 1500 card based on, for example, the frequency of the corresponding RF signal received by the RF receiver 242. In another embodiment, an IR remote cbntrol device corresponding to a television that is served by an expander card 1500 may be configured to output a distinguishing code or identifier inside each IR command in order to identify such IR command as corresponding to the IR remote control device.

The analog outputs of the expander cards 1500 may be modulated at different frequencies so that the outputs do not interfere with each other. Furthermore, each television that is served by an expander card may be tuned to a television channel corresponding to the frequency of the output of a respective expander card 1500. In another embodiment, the analog output of an expander card 1500 may be converted into a digital format, such as, for example, MPEG-2, and then modulated using, for example, QAM-64 prior to being transmitted to a television 140-i.

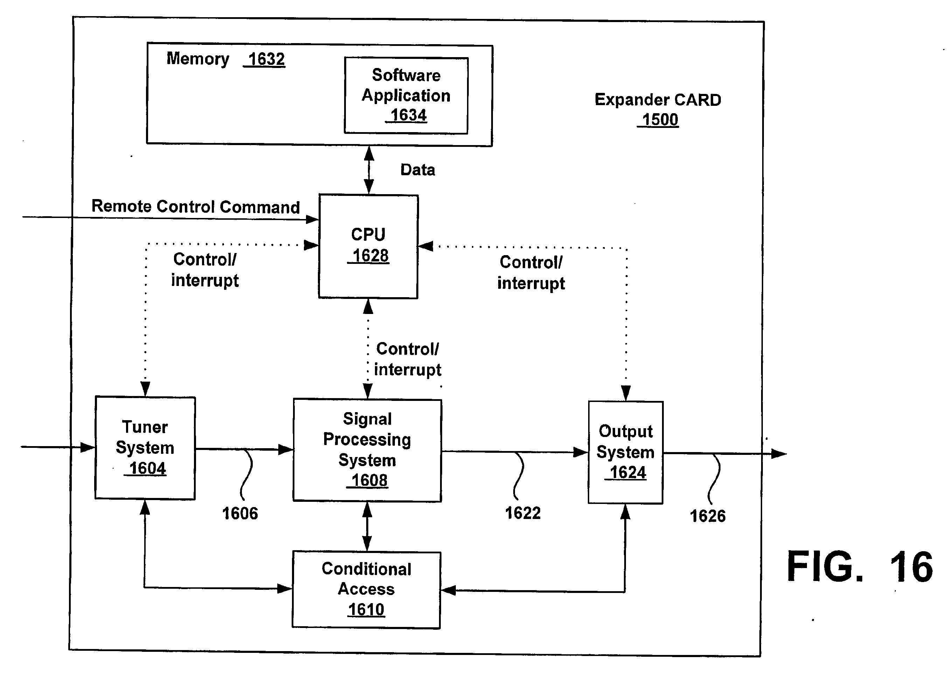

FIG. 16 is a simplified block diagram illustrating a non-limiting example of selected components of an expander card 1500, according to one embodiment. The expander card 1500 may interface with the local interface 210 (FIG. 15A) using a connection such as, for example, a bus (not shown). The expander card 1500 includes a CPU 1628, an output system 1624 for providing an output 1626 to a television, a tuner system 1604 for tuning to a particular television service, and a signal processing system 1608 for processing (*e.g*., demodulating and decoding) signals output by the tuner system 1604. The CPU 1628 executes one or more software applications (*e.g*., software application 1634) stored in memory 1632 in order to control the operation of the expander card 1500 and to provide television services and/or other functionality to a user.

The expander card 1500 may also include a conditional access component 1610 for providing conditional access to television services. The conditional access component 1610, which may be, for example, a microprocessor that is assigned a unique network address, may require that an expander card 1500 be authorized to provide certain services and/or functionality prior to enabling the expander card 1500 to provide such services and/or functionality. The conditional access component 1610 may be configured, for example, to enable the signal processing system 1608 to decrypt digital signals and/or descramble analog signals received by the expander card 1500. The conditional access component 1610 may also be configured to encrypt digital signals and/or scramble analog signals that are output by the output system 1624. The functionality of the conditional access component 1610 may alternatively be provided by software that is stored in memory 1632 and executed by the CPU 1628. In yet another embodiment, another conditional access component (not shown) that is a fixed part of (e.g., integrated into) the STT 200 (FIG. 1) but that is not a part of an expander card 1500, may be configured to enable conditional access to services and/or functionality provided by one or more expander cards 1500 connected to the STT 200, and/or to services and/or functionality that are to be output to the television 140-1 (FIG. 1).

The tuner system 1604 enables the expander card 1500 to tune to downstream signals, thereby allowing a user to receive digital and/or analog signals transmitted by the headend 110 via the communications network 130. The tuner system 1604 includes, in one implementation, an out-of-band (OOB) tuner for receiving quadrature phase shift keying (QPSK) data and a QAM/analog tuner for receiving in-band analog and digital television services.

In an alternative embodiment, the STT 200 (FIG. 2) may include a QPSK transceiver (not shown) that provides functionality to a plurality of expander cards 1500. The QPSK transceiver which may be, for example, part of the tuner system 225 (FIG. 2) of the STT 200, may be used by the plurality of expander cards 1500 for OOB communications with the headend 110 (FIG. 1). The sharing of a QPSK transceiver among a plurality of expander cards 1500 may be feasible since the utilization rate of an OOB QPSK channel by any single expander card 1500 is typically low. The tuner system 225 may be configured to demultiplex downstream OOB data received from the headend 110 prior to forwarding the downstream OOB data to respective expander cards 1500. Furthermore, the tuner system 225 may be configured to multiplex upstream OOB data received from a plurality of expander cards 1500 prior to transmitting the upstream OOB data the headend 110 (*e.g*., via a QPSK transceiver within the tuner system 225).

The expander card 1500 also includes a signal processing system 1608 that is preferably capable of demodulating, demultiplexing, and decoding signals that are extracted by the tuner system 1604. One or more of the components of the signal processing system 1608 can be implemented with software, a combination of software and hardware, or preferably with hardware. Although shown as one module, the signal processing system 1608 may comprise multiple modules that are located in various parts of the expander card 1500.

The output system 1624 may include digital-to-analog converters for outputting analog audio and video signals that are in a suitable format for a TV 140-i (FIG. 1). In one possible embodiment, the output system 1624 may include an MPEG encoder for outputting digital video that is suitable for a digital television, such as, for example, an HDTV. Therefore, the expander card 1500 may be configured to output analog video signals and/or digital video signals. Digital signal outputs from a plurality of expander cards 1500 may be multiplexed and transmitted onto a digital home network using an MPEG multiplexer (not shown) that is part of the STT 200 (FIG. 1).

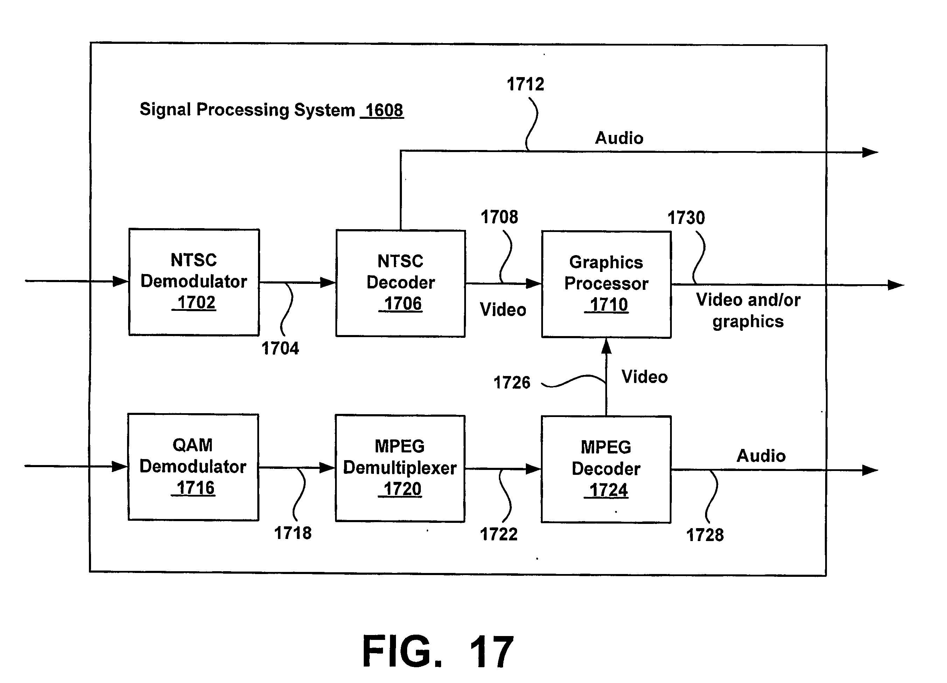

FIG. 17 is a simplified block diagram depicting one possible embodiment, among others, of the signal processing system 1608. As shown in FIG. 17, the signal processing system 1608 includes an NTSC demodulator 1702 and an NTSC decoder 1706. The NTSC demodulator 1702 digitizes analog signals 1606-1 that are received from the tuner system 1604 (FIG. 16) and outputs them as digitized analog signals 1704 which are then decoded by the NTSC decoder 1706. Furthermore, the signal processing system 1608 includes a quadrature amplitude modulation (QAM) demodulator 1716, an MPEG demultiplexer 1720 and an MPEG decoder 1724. The QAM demodulator 1716 demodulates digital signals 1606-2 that were modulated (*e.g*., at the headend 110 (FIG. 1)) using QAM. The MPEG demultiplexer 1720 demultiplexes digital signals 1718 after they are demodulated by the QAM demodulator 1716. The MPEG decoder 1724 decodes signals 1722 that have been demultiplexed by the MPEG demultiplexer 1720. The signal processing system 1608 also includes a graphics processor 1710 for adding graphics data to decoded video signals 1726 and 1708 that are output by the MPEG decoder 1724 and the NTSC decoder 1706, respectively. The MPEG decoder 1724 and the NTSC decoder 1712 also output audio signals 1728 and 1712 respectively. The output signals 1730 of the graphics processor 1710 and the decoded audio outputs 1712 and 1728 are provided to the output system 1624 (FIG. 16), which encodes the signals 1712, 1728, and 1730 into a format that is suitable for a television that is served by the expander card 1500 (FIG. 16).

In one embodiment, where the expander card 1500 outputs video streams in an MPEG format, graphics may be overlaid onto a video stream prior to such video stream being encoded in an MPEG format. In this manner, multiple graphical user interfaces (GUIs) that are encoded in an MPEG format may be multiplexed onto a single MPEG transport stream.

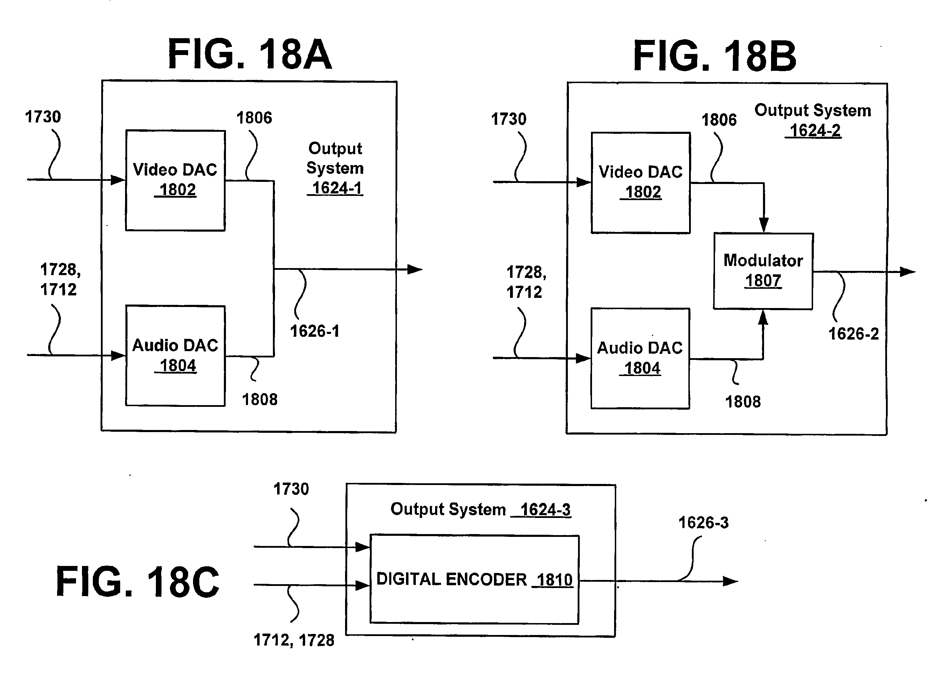

FIG. 18A is a simplified block diagram illustrating a non-limiting example of an output system 1624-1 that represents one embodiment of the output system 1624 (FIG. 16). As shown in FIG. 18A, the output system 1624-1 includes a video digital-to-analog converter (DAC) 1802 and an audio DAC 1804. The video DAC 1802 converts digital video signals 1730 into analog video signals 1806 that are in a certain format (*e.g*. NTSC) that is suitable for a TV 140-i (*e.g*., TV 140-2 or TV 140-3 shown in FIG. 1). The Audio DAC 1804 converts digital audio signals 1728 & 1712 into analog audio signals 1808 that can be decoded and played by a TV 140-i. The outputs 1806 and 1808 of the video DAC 1802 and the audio DAC 1804, respectively, are combined into output signals 1626-1 and transmitted to a TV 140-i.

FIG. 18B is a simplified block diagram illustrating a non-limiting example of an output system 1624-2 that represents another embodiment of the output system 1624 (FIG. 16). As shown in FIG. 18B, the output system 1624-2 includes a video DAC 1802 and an audio DAC 1804 that output analog video signals 1806 and analog audio signals 1808, respectively, to a modulator 1807. Upon receiving the analog signals 1806 and 1808, the modulator 1807 modulates the signals at a certain frequency and transmits the modulated signals to a TV 140-i either via the communications interface 222 (FIGS. 15A and 15B) or via another interface (not shown). In one embodiment, the modulator 1807 modulates the signals 1806 and 1808 at (1) a UHF frequency (*e.g*., about 1 GHz) that is above the in-band frequency of television service signals received from the headend 110 (FIG. 1), (2) a frequency corresponding to the frequency of the highest channel (*e.g*., channel 134) in the in-band frequency, or (3) a frequency corresponding to another predetermined television channel, depending on a desired implementation for transmitting data to a TV 140-i. The frequency at which the modulator 1807 outputs signals may be configured by the CPU 1634 (FIG. 16) to correspond to a certain television channel based on, for example, instructions received by the CPU 1634 from the STT processor 224 (FIG. 15B). Therefore, each expander card 1500 may be configured to output television services at a frequency corresponding to a television channel to which a respective television 140-i is tuned. In this manner a television 140-i may not need to be physically modified to be able to receive and display television services received from an expander card 1500.

FIG. 18C is a simplified block diagram illustrating a non-limiting example of an output system 1624-3 that represents a further embodiment of the output system 1624 (FIG. 16). As shown in FIG. 18C, the output system 1624-3 includes a digital encoder 1810 that encodes digital video signals 1730 and digital audio signals 1712 and 1728 into digital output signals 1626-3 that are suitable for a television that is capable of decoding the digital output signals 1626-3 and displaying their content. The digital encoder 1810 may be, for example, an MPEG-2 encoder. Furthermore, the digital output signals 1626-3 may be formatted in, for example, an MPEG-2 format that is suitable for standard-definition and/or high definition televisions. One advantage of using an MPEG-2 format is that digital outputs 1626-3 of several expander cards 1500 (FIG. 15B) may be multiplexed and transmitted by a single QAM modulator (not shown) over, for example, a digital home network (not shown). Furthermore, the MPEG-2 standard supports encryption, decryption, stereo presentations, and the inclusion of additional data streams (*e.g*., additional audio tracks, closed-captioning data, etc.). As a result, an expander card 1500 that is configured to output television services that are in an MPEG-2 format (rather than in an analog format) is capable of providing more enhanced television services and functionality.

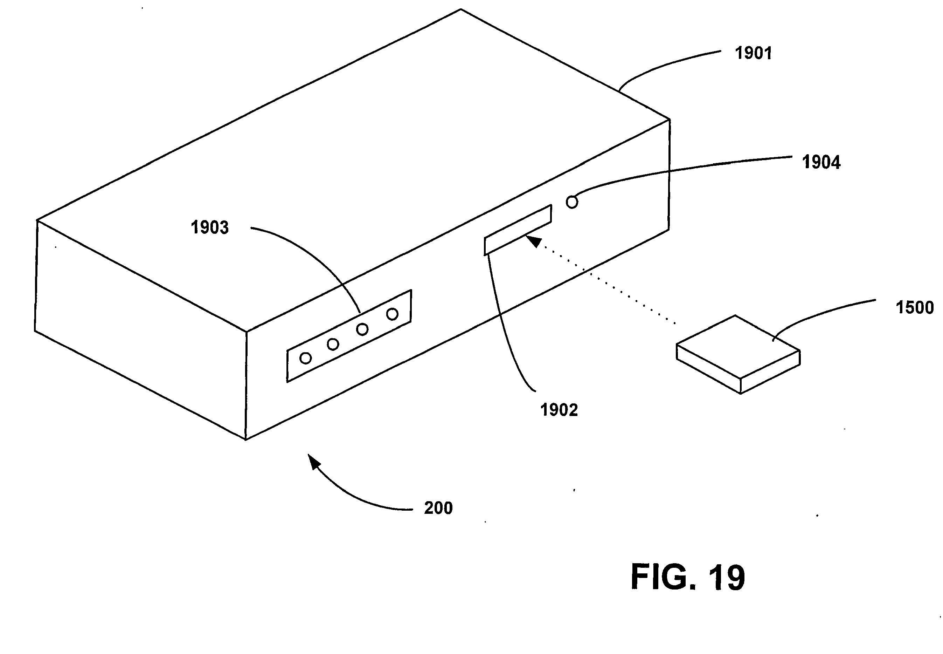

FIG. 19 is a schematic diagram depicting a non-limiting example of an STT 200 that can accommodate an expander card 1500. The STT 200 includes a housing 1901 that houses interior STT components. The housing 1901 has an opening 1902 that is large enough to receive the expander card 1500, which may be connected to the STT 200 by being partially or completely inserted into the housing 1901, depending on a desired implementation. An eject button 1904 may, in one implementation, be used to eject the expander card 1500 from the STT 200. In an alternative embodiment, the expander card 1500 may be removed from the STT 200 by simply being grasped and pulled out. The STT 200 may.also include a control panel 1903 having input keys (*e.g*., a power on/off key) that may be used to control some of the functionality of the STT 200. The STT 200 also preferably has one or more connections (not shown) for receiving one or more cables (e.g., coaxial cables), and a power cord (not shown) for connecting to a power source.

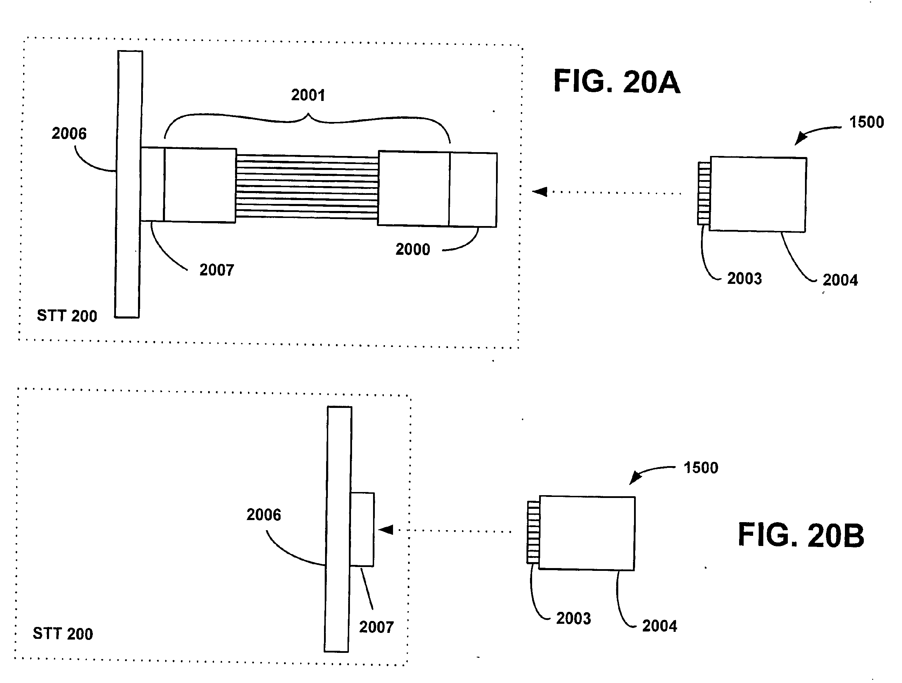

FIGS. 20A and 20B are schematic diagrams depicting non-limiting examples, among others, of how an expander card 1500 may be connected to an STT 200 (FIG. 1). As shown in FIG. 20A, the expander card 1500 may be plugged into a socket 2000 that is configured to receive a portion 2003 of the expander card 1500. The portion 2003 may be, for example, a portion of a printed circuit card that is housed inside a casing 2004 of the expander card 1500. The socket 2000 is connected to a ribbon cable 2001, which is in turn connected to a slot 2007 in a motherboard 2006 of the STT 200. Alternatively, as shown in FIG. 20B, the portion 2003 of the expander card 1500 may be plugged directly into the slot 2007 of the motherboard 2006, depending on a desired implementation.

In an alternative embodiment, an expander card 1500 may be inserted into or otherwise connected to a television (not shown) that is configured to receive the expander card 1500. Upon being inserted into and/or connected to a television, the expander card 1500 receives downstream television services, extracts a user selected television service, and provides the extracted television service to the television, which then displays the selected television service to a user. In this manner, set-top functionality may be provided by the expander card 1500 without the need for a stand-alone STT.

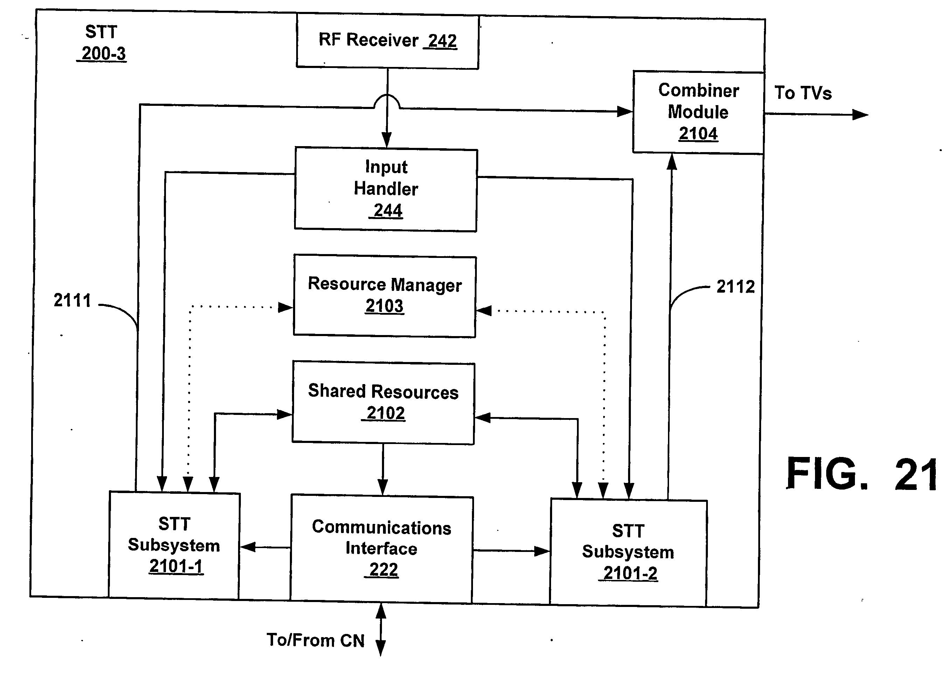

FIG. 21 is a simplified block diagram illustrating a non-limiting example of selected components of an STT 200-3 that represents an embodiment of the STT 200 shown in FIG. 1. The STT 200-3 includes STT sub-systems 2101 that utilize shared resources 2102 of the STT 200-3 to help provide television services, television presentations, and/or other STT functionality (e.g., VOD, PPV, and/or PVR, among others) to respective televisions 140-i (FIG. 1). Each STT subsystem 2101 may include a respective tuner for extracting a television service that is to be provided to a respective TV 140-i. The outputs 2111 and 2112 (which may each comprise data corresponding to a television service, a television presentation or some other STT functionality) of the STT subsystems 2101-1 and 2101-2, respectively, may be combined by a combiner module 2104 and then transmitted to respective televisions 140-1 and 140-2 (FIG. 1). Furthermore, these outputs 2111 and 2112 may be modulated at different frequencies (*e.g*., corresponding to different television channels) by the subsystems 2101-1 and 2101-2, respectively, or by the combiner module 2104, depending on a desired implementation.

Each STT subsystem 2101 may also include a signal processing system, a processor, memory, and an output system (not shown in FIG. 21). A resource manager 2103, which may be an application specific integrated circuit (ASIC), coordinates access to the shared resources 2102. The resource manager 2103 may include registers for storing values to indicate whether corresponding shared resources are currently available (*e.g*., not being used by an STT subsystem 2101). For example, if a shared resource is available, then a logical value of "0" may be stored in a corresponding register in the resource manager 2103, and if the shared resource is unavailable, then a logical value of "1" may be stored in the corresponding register, or vice versa, depending on a desired implementation. An STT subsystem 2101 may query the resource manager 2103 to determine whether a shared resource is available prior to attempting to utilize the shared resource. An STT subsystem may be prohibited from using or attempting to use a shared resource when such resource is unavailable (e.g., being used by another STT subsystem), as determined by the resource manager 2103.

An RF receiver 242 receives remote control commands that are encoded as wireless RF signals, and encodes the remote control commands as electric signals. The electrically encoded remote control commands are provided by the RF receiver 242 to an input handler 244 which forwards each command to a respective STT system 2101. An IR receiver or some other user input detector (not shown in FIG. 9) may be used in addition to or in the place of RF receiver 242 to receive user input that is then forwarded to an STT subsystem 2101.

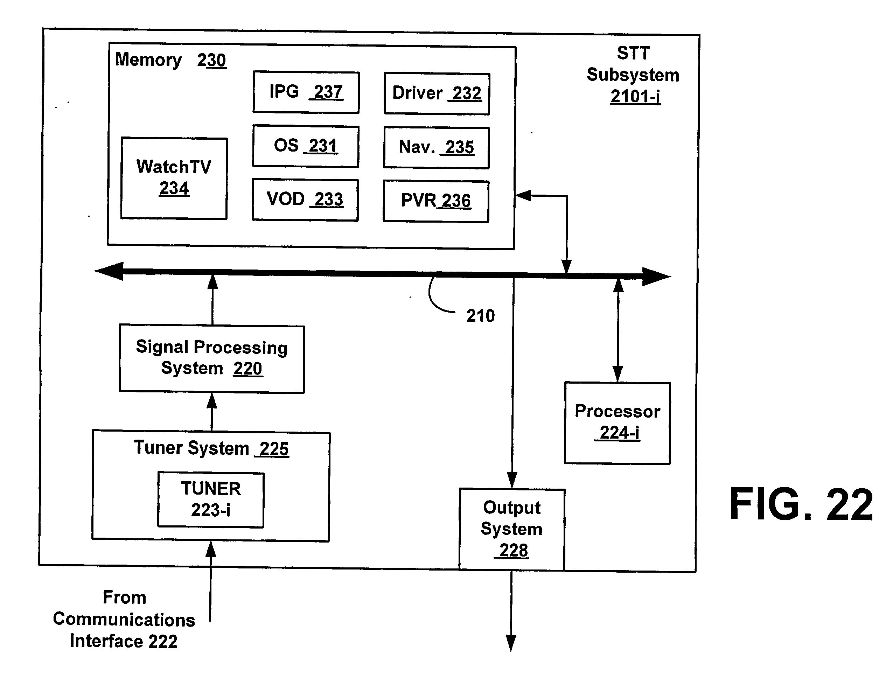

FIG. 22 is a simplified block diagram illustrating a non-limiting example of selected components of an STT subsystem 2101 according to one embodiment of the invention. The STT subsystem 2101 may be used to provide television services, television presentations, and/or other STT functionality to a TV 140-i (FIG. 1). As shown in FIG. 22, the STT subsystem 2101 includes many components that are the same or similar to components of an STT 200 (FIG. 1). These components include, for example, a memory 230, a processor 224, a tuner system 225, a signal processing system 220, and an output system 228. The software in memory 230 may include an operating system (O/S) 231, a WatchTV application 234, a navigator application 235, a personal video recorder (PVR) application 236, a driver 232, and/or an interactive program guide (IPG) application 237. An STT subsystem 2101 may include different, fewer, or additional components than shown in FIG. 22 depending on a desired implementation.

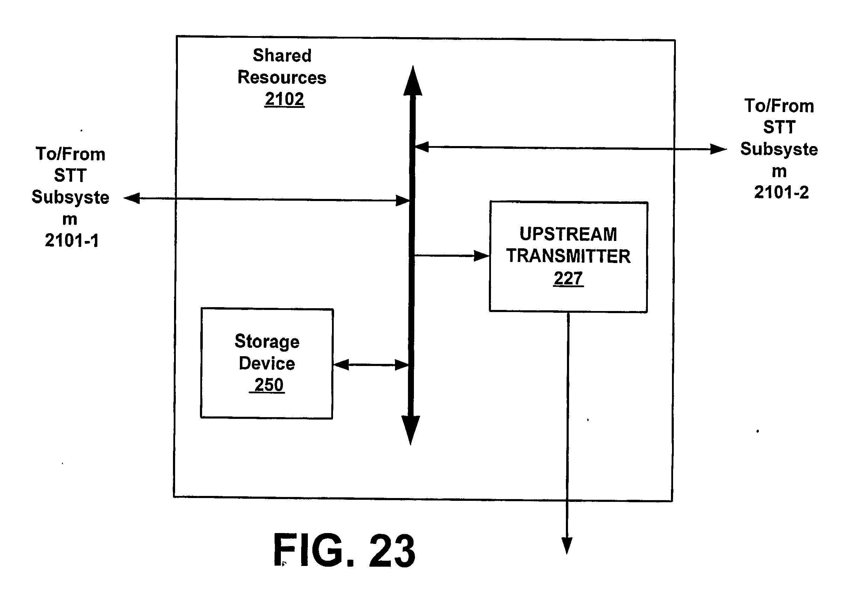

FIG. 23 is a simplified block diagram illustrating a non-limiting example of shared resources 2102 according to one embodiment. As shown in FIG. 23, the shared resources 2102 include a storage device 250 and an upstream transmitter 227. The storage device 250 may be used to store certain television presentations (*e.g*., movies) that are received by the STT 200-3 (FIG. 21) from the headend 110 (FIG. 1). In one preferred embodiment, the storage device 250 includes a hard drive that reads from and writes to a hard disk. The upstream transmitter 227 preferably includes a QPSK modulator that is used to transmit upstream data to the headend 110. Other resources that may be part of the shared resources 2102 include, for example, memory (volatile and/or non-volatile), a cable modem, and/or a processor, among others, depending on a desired implementation.

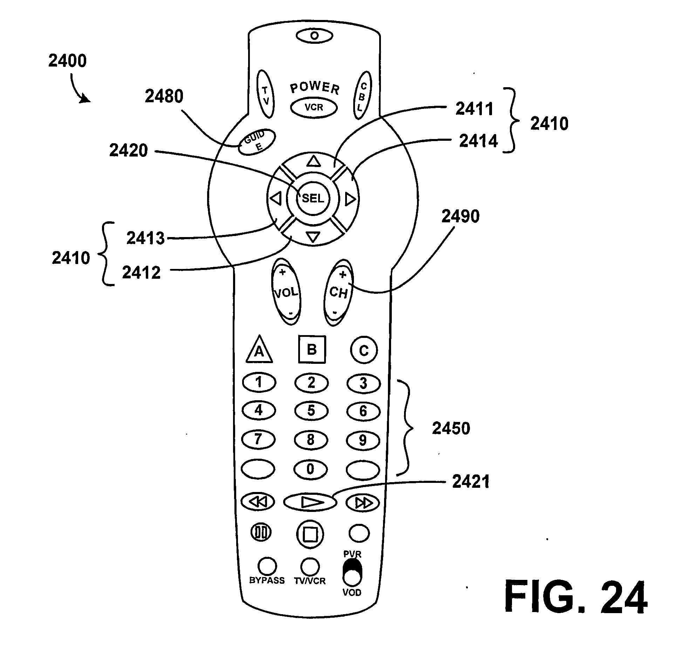

FIG. 24 is a schematic diagram depicting a non-limiting example of a remote control device (RCD) 2400 that may be used to provide user input to an STT 200 (FIG. 1). The RCD 2400 may be configured to output commands that are encoded in either IR signals or in RF signals, depending on a desired implementation. The RCD 2400 described herein is merely illustrative and should not be construed as implying any limitations upon the scope of the invention. Furthermore, in an alternative embodiment of the invention, different and/or additional systems and methods of providing user input may be used including, for example, an RCD having different keys and/or key layouts than the RCD 2400.

As shown in FIG. 24, the RCD 2400 includes four arrow keys 2410 including an up arrow key 2411, a down arrow key 2412, a left arrow key 2413, and a right arrow key 2414. The arrow keys 2410 can be used to scroll through on-screen options and/or to highlight an on-screen option. Other keys provided by the RCD 2400 include a select key 2420, a guide key, 2480, and a channel key 2490, among others. The select key 2420 may be used to select a currently highlighted on-screen option. The guide key 2480 may be used to access a television program guide such as, for example, IPG screen 2500 (FIG. 25). The channel key 2490 may be used to request a television service that has a channel number that is incrementally lower or higher than the number of a currently presented television service, depending on which portion of the channel key 2490 is pressed. The number pad 2450 includes number keys (e.g., numbered 0-9) that may be used, for example, to enter a certain channel number in order to request a corresponding television service.

FIG. 25 is a schematic diagram depicting a non-limiting example of an IPG screen 2500 that may be presented by IPG application 237 in response to user input that may be provided via, for example, the activation of the guide key 2480 (FIG. 24). The top left portion of IPG screen 2500 is a detailed focus area 2510 that includes detailed information for a currently highlighted television presentation listing which, in the current example, is the Good Morning America listing 2520. The detailed television presentation listing information may include a channel number, a television service name (*e.g*., ABC), a television presentation listing name (*e.g*., Good Morning America), a television presentation description, a television presentation duration, and/or episode information or rating, as applicable.

Video corresponding to a television presentation currently being provided by the STT 200 (FIG. 1) may be displayed in a video area 2530. Immediately below the video area 2530 is an information banner 2540 for displaying the television channel number *(e.g.,* 5) corresponding to the television presentation, the current day and date (*e.g*., Thursday, 1/17), and the current time (*e.g*., 5:00 a.m.).

An IPG grid 2565 includes a main listing display area 2560, a time area 2570, and a television service identification area 2580. The main listing display area 2560 contains listings of television presentations that correspond to respective television services identified in television service identification area 2580, and that are or will be available during the time periods listed in the time area 2570. The television service identification area 2580 includes a vertical list of television functionalities organized sequentially from top to bottom by increasing television channel number (except for the highest numbered television service which is typically listed immediately above the lowest numbered television service). In one embodiment, the arrow buttons 2410 (FIG. 24) can be used to scroll through the main listing display area 2560 and to highlight a desired television presentation listing, and the select button 2420 can be used to request a television presentation identified by a currently highlighted television presentation listing. A requested television presentation may be provided to a viewer by the WatchTV application 234 (FIG. 2).

Though other implementations are contemplated within the scope of the invention, when the IPG application is first activated by the user, the lowest numbered television service listing is typically centered in the television service identification area 2580. In this non-limiting example, the lowest numbered television service listing in the television service identification area 2580 is "ABC" (channel number 2). Continuing with this non-limiting example, the left-most time column in the main listing display area 2560 includes titles of television presentation listings scheduled to be available about two hours into the future (e.g., at 7:00 a.m.) with the middle title in the column being highlighted and corresponding to the lowest numbered television service. Therefore, in this example, the Good Morning America listing 2520, which is scheduled to be provided via the "ABC" service (channel number 2), is highlighted.

The bottom area 2550 of IPG screen 2500 indicates the selected day for which television listings are being displayed as well as information about the current functions of relevant keys on the remote control device 2400. In an alternative embodiment, an IPG screen may have fewer, additional, and/or different components, and may have a different layout. For example, an IPG screen might not include a detailed focus area 2510, a video area 2530, an information banner 2540, and/or a bottom area 2550.

FIG. 26 is a schematic diagram depicting a non-limiting example of a Recorded Programs List (RPL) screen 2600 that contains a list of recorded video presentations. The RPL screen 2600 may be presented by PVR application 236 (FIG. 2) in response to user input that may be provided via, for example, the RCD 2400 (FIG. 24). A recorded programs list 2660 contains recording entries corresponding to recorded video presentations that are stored in the storage device 250 (FIG. 2). Each recording entry in the recorded programs list 2660 includes information such as the title of a recorded video presentation, the date the video presentation was recorded, the start time of the recording, and the length (*i.e.,* play time) of the recorded video presentation. In one embodiment, the arrow keys 2410 (FIG. 24) can be used to scroll through the recorded programs list 2660 and/or to highlight a desired recording entry.

The heading area 2602 contains a heading for the RPL screen 2600. In this example, the heading area contains the heading "Recorded Programs List." The bottom area 2650 of RPL screen 2600 contains information about the current functions of relevant keys on the remote control device 2400 (FIG. 24). As suggested in bottom area 2650, the play key 2421 (FIG. 24) may be used to request the playing of a video presentation corresponding to a currently highlighted recording entry.

Video corresponding to a television presentation currently provided by the STT 200 (FIG. 1) is displayed in a video area 2630. Next to the video area 2630 is a detailed focus area 2610 for providing detailed information (e.g., episode information and/or rating (not shown)) for a currently highlighted recording entry 2620. As shown in FIG. 26, the currently highlighted recording entry 2620 corresponds to the video presentation title "JAG" 2622.

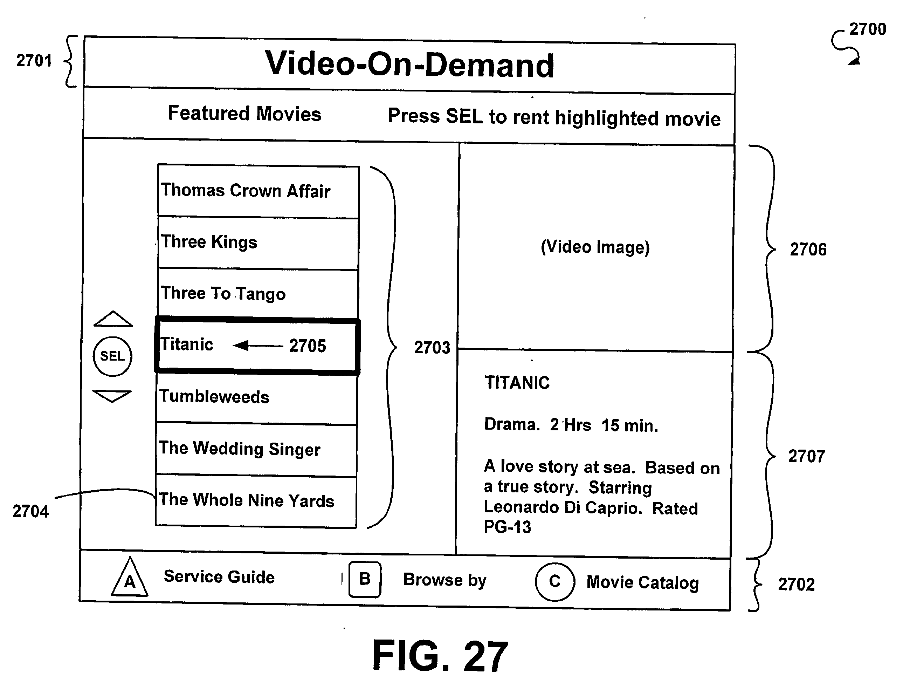

FIG. 27 is a schematic diagram depicting an non-limiting example of a VOD selection screen 2700 that may be provided by the VOD application 233 (FIG. 2). A user may utilize the selection screen 2700 in order to request a video-on-demand presentation. The top portion 2701 of example screen 2700 contains a screen heading (e.g., "Video-On-Demand"), while the bottom portion 2702 illustrates relevant navigation buttons available on a remote control device (e.g., RCD 2400 (FIG. 24)).

As shown in FIG. 27, a video presentation list 2703 contains the titles of video presentations, such as, for example, video title 2704 ("The Whole Nine Yards"), including a highlighted video title 2705 ("Titanic"). A user may scroll through the video presentation list 2703 using the up and down arrow buttons 2411 & 2412 on the RCD 2400 and may request a currently highlighted video title by activating the select button 2420. A reduced screen area 2706 displays an image corresponding to a currently highlighted video title. As the user scrolls through the video presentation list 2703, the image displayed in the reduced screen area 2706 changes accordingly. An information area 2707 provides information about a currently highlighted video title, including for example, the playing time, the rating, and a brief description of the corresponding video presentation.

Each of the user interface (UI) screens depicted in FIGS. 25-27 may be provided to a user by an STT 200 (FIG. 1) and/or by an STT 1202 (FIG. 12A). Furthermore, the UI screens depicted in FIGS. 25-27 are examples, among others, of UI screens that may be provided to a user by an STT. Therefore, in other embodiments, a user may be presented with UI screens that have different layouts and/or components than the UI screens depicted in FIGS. 25-27.

FIG. 28 is a flow chart illustrating a non-limiting example of a method 2800 for enabling an STT 200 (FIG. 1) to receive remote control commands from an IR remote control device that is located in another room of a customer premises. The method 2800 may be performed by, for example, the systems depicted in FIGS. 4, 9, and 12A-12C. As indicated in step 2801, an IR receiver receives a remote control command that is encoded in an IR signal. The IR receiver may be a stand-alone unit (e.g., IR receiver 404 depicted in FIG. 4) or may be integrated into another device such as, for example, an STT (e.g., STT 1202 depicted in FIG. 12) or a converter module (e.g., converter module 902 depicted in FIG. 9).

After receiving an IR signal, the IR receiver converts the IR signal into an electric signal, as indicated in step 2802, and then transmits the electric signal to the STT 200, as indicated in step 2803. The IR receiver may include, for example, a photodiode for converting the IR signal into an electric signal and an amplifier for amplifying the electric signal. The STT 200 may receive the electric signal via the same transmission link that is used by the STT 200 to receive data from a headend 100 (FIG. 1).

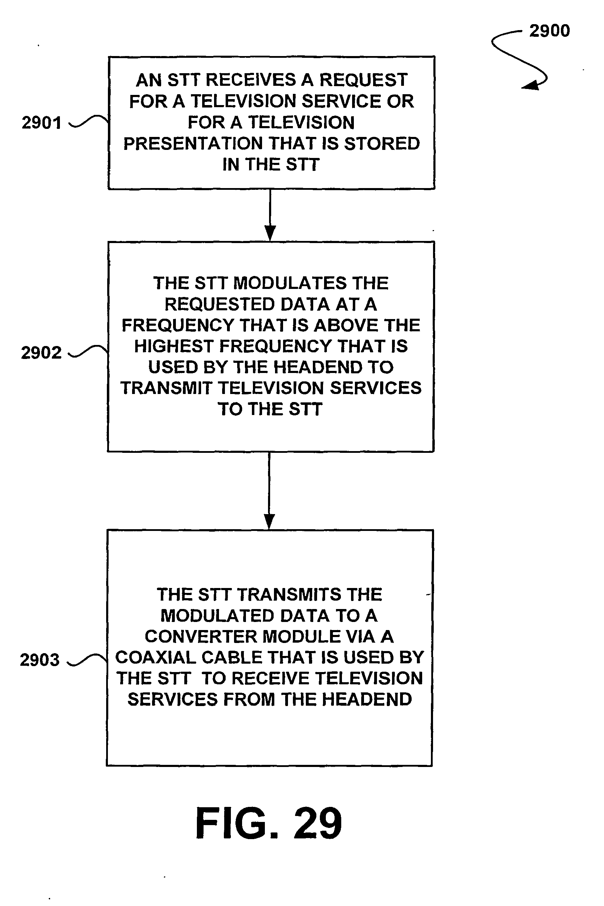

FIG. 29 is a flow chart illustrating a non-limiting example of a method 2900 that enables an STT 200 (FIG. 1) to provide television services to a television 140-i (FIG. 1) that is remotely located (e.g., in another room) using pre-existing transmission links at a customer premises. In step 2901, an STT 200 receives a request for a television presentation (*e.g*., a movie) that is stored in the STT 200, or for a television service (*e.g*., the ABC channel) that is received by the STT 200 from a headend 110 (FIG. 1). The request may have been transmitted to the STT 200 via a wireless RF signal or via an IR signal that was electrically encoded and forwarded to the STT 200 by another device (*e.g*., an IR receiver 404 (FIG. 4)).

In response to receiving the request, the STT 200 modulates the requested data (*e.g*., a television service or a locally stored television presentation) at an ultra high frequency (UHF) that is above the highest frequency used by a headend to transmit television services to the STT 200 *(e.g.,* at a UHF frequency above 860 MHz in some subscriber television systems), as indicated in step 2902. In one preferred embodiment, the STT 200 modulates the requested data at a UHF frequency of about 1 GHz.

In step 2903, the STT 200 transmits the UHF modulated data to an RF converter via a transmission link (e.g., a coaxial cable) that is used by the STT 200 to receive television services from the headend 110 (FIG. 1). The RF converter may be a stand alone unit or may be integrated into another device (e.g., converter/splitter module 602 (FIG. 6)). The RF converter receives the UHF modulated data, converts the frequency of the data to a frequency corresponding to a predetermined television channel, and then forwards the data to a television 140-i, which is preferably located in a room other than where the STT 200 is located.

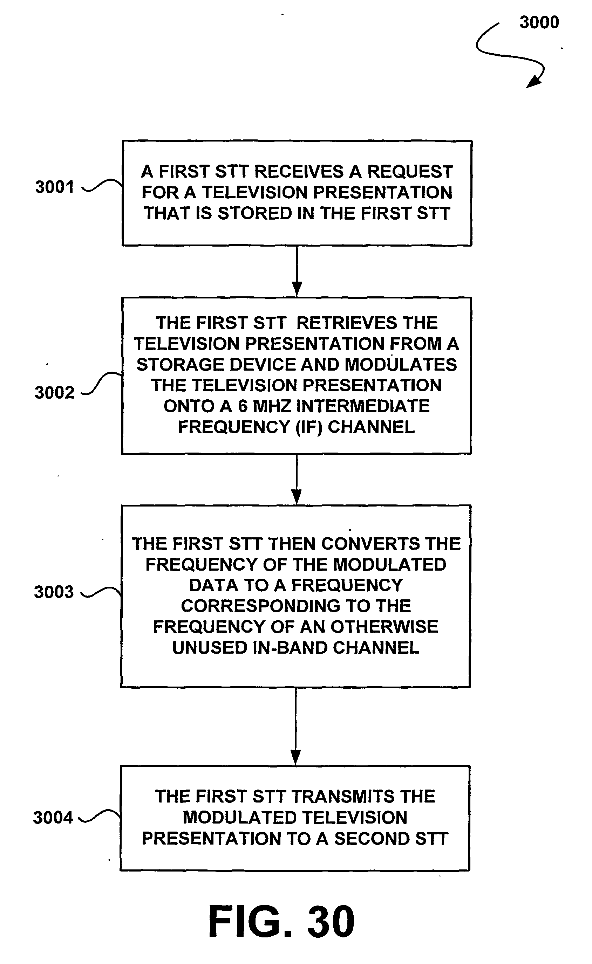

FIG. 30 is a flow chart illustrating a non-limiting example of a method 3000 that enables a first STT 200 (FIGS. 12A-12C) to provide recorded television presentations to a second STT 1202 (FIGS. 12A-12C) that is remotely located (*e.g*., in another room) using pre-existing transmission links at a customer premises. The second STT 1202 may then provide PVR functionality (e.g., trick modes) to a user even if the second STT 1202 is not configured to store television presentations. In step 3001, a first STT 200 receives a request for a television presentation (*e.g*., a movie) that is stored in the first STT 200. The request may have been transmitted by a remote control device using an RF signal or an IR signal. If an IR signal is used, then it may be electrically encoded and forwarded to the first STT 200 by another device (*e.g*., an IR receiver 404 (FIG. 12B) or an STT 1202 (FIG. 12A)). The request for a television presentation may also be provided to the STT 200 by the STT 1202 in response to user input that is received by the STT 1202. In response to receiving the request, the first STT 200 retrieves the requested television presentation from a storage device within the first STT 200 and modulates the television presentation using, for example, 64-QAM modulation, onto a 6 MHz intermediate frequency (IF) channel, as indicated in step 3002. The frequency of the modulated data is then converted by the first STT 200 to a frequency corresponding to the frequency of an otherwise unused in-band channel, as indicated in step 3003. In one preferred embodiment, the frequency of the modulated data is converted to the frequency of the highest in-band channel (*e.g*., channel 134 at 855 MHz in some subscriber television systems). Then in step 3004, the modulated television presentation is transmitted by the first STT 200 to the second STT 1202. Upon receiving the television presentation, the second STT 1202 may then provide it to a television 140-2 (FIGS. 12A-12C) that is located near (*e.g*., in the same room as) the second STT.

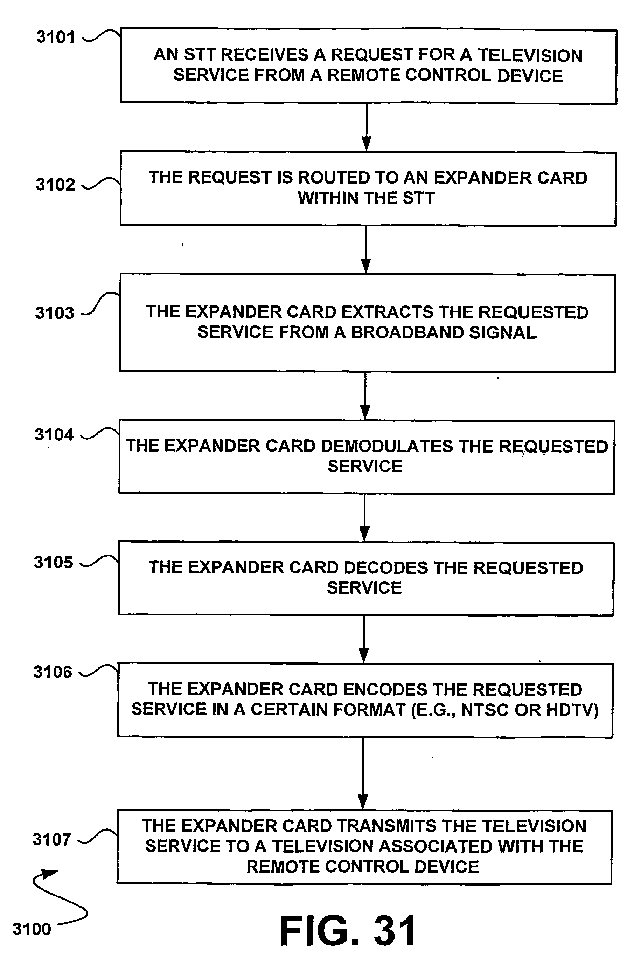

FIG. 31 is a flow chart illustrating a non-limiting example of a method 3100 that may be performed by an STT 200 (FIG. 1) comprising an expander card 1500 (FIG. 19), which may have been added to the STT 200 by, for example, a user of the STT 200. Adding an expander card 1500 to an STT 200 enables the STT 200 to provide television services to a plurality of televisions. For example, pre-existing STT 200 components (i.e., not including the expander card 1500) may provide television services to a first television 140-1 (FIG. 1), whereas the expander card 1500 may provide television services to a second television 140-2 (FIG. 1).

As indicated in step 3101, an STT 200 receives a request for a television service from a remote control device. The request is then routed to an expander card 1500 within the STT 200, as indicated in step 3102. In response to receiving the request, the expander card 1500 extracts the requested service from a broadband signal, as indicated in step 3103, and then demodulates and decodes the requested service, as indicated in steps 3104 and 3105, respectively. The expander card 1500 may also process the requested service in other ways. For example, if the requested service is multiplexed with other services, then the expander card 1500 may also demultiplex the stream containing the requested service. After the expander card 1500 decodes the requested television service, then the expander card 1500 encodes the requested service in a certain format (*e.g*., an NTSC or HDTV compatible format), as indicated in step 3106, and transmits the television service to the television 140-2 associated with the remote control device that provided the request for the television service, as indicated in step 3107.

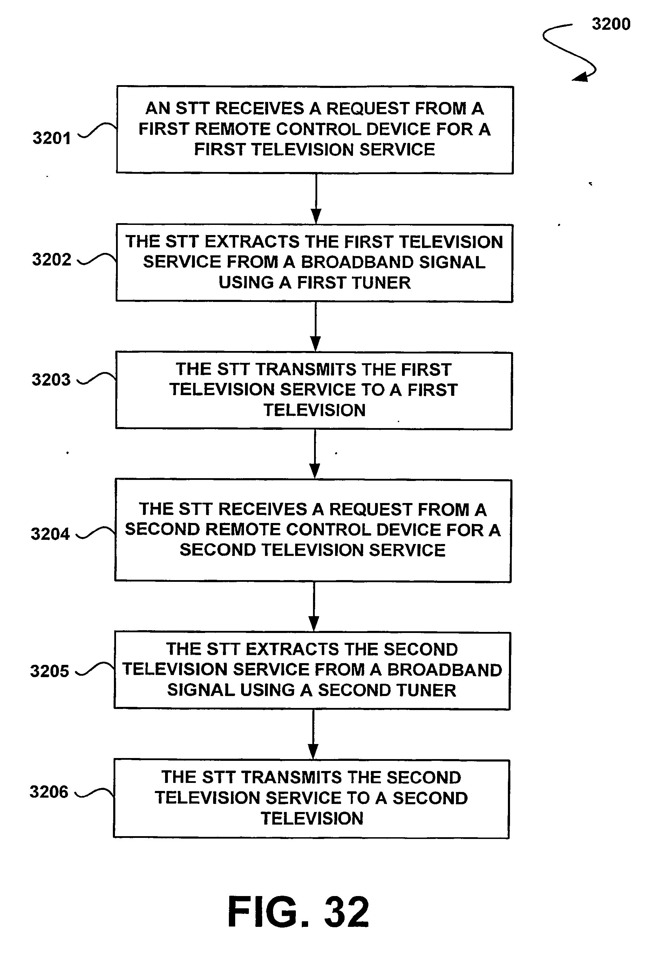

FIG. 32 is a flow chart illustrating a non-limiting example of a method 3200 that may be performed by an STT 200 (FIG. 1) comprising a plurality of tuners 223 (*e.g*., FIG. 2 and FIG. 22), wherein each of the plurality of tuners 223 provides television services to a respective television. The plurality of tuners 223 may be part of a single tuner system 225 (FIG. 2) or may be part of respective tuner systems 225 (FIG. 22). As indicated in step 3201, an STT 200 receives from a first remote control device a request for a first television service. The request may be received directly from the remote control device or may be routed to the STT 200 by another device (*e.g*., an IR receiver 404 (FIG. 4)). In response to receiving the request for the first television service, the STT 200 extracts the first television service from a broadband signal using a first tuner 223-1, as indicated in step 3202, and then transmits the first television service to a first television 140-1 (FIG. 1), as indicated in step 3203. Then, as indicated in step 3204, the STT 200 receives from a second remote control device a request for a second television service. In response to receiving the request for the second television service, the STT 200 extracts the second television service from the broadband signal using a second tuner 223-2, as indicated in step 3205, and then transmits the second television service to a second television 140-2 (FIG. 1), as indicated in step 3206.

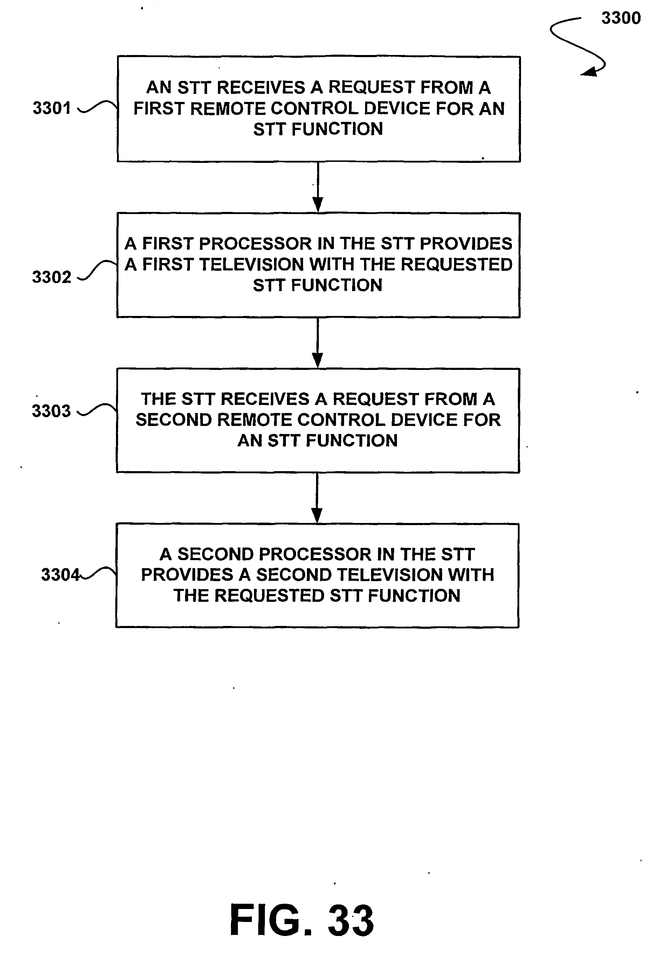

FIG. 33 is a flow chart illustrating a non-limiting example of a method 3300 that may be performed by an STT comprising a plurality of processors 224-i (FIGS. 2 and 22) for providing functionality to respective televisions 140-i (FIG. 1). Each of the plurality of processors 224 may be part of an expander card 1500 (FIG. 15) that is connected to the STT 200 or may be a fixed part of the STT 200 (*e.g*., a fixed part of the STT's mother board). As indicated in step 3301, an STT 200 receives a request from a first remote control device for an STT function (*e.g*., an interactive program guide, a VOD catalogue, or a PVR catalogue, among others). In response to the STT 200 receiving the request from the first remote control device, a first processor 224-1 in the STT provides a first television with the requested STT function. The first processor may provide the STT function by executing a corresponding software application (*e.g*., an IPG application 237 (FIG. 2)). Then, as indicated in step 3301, the STT 200 receives a request from a second remote control device for an STT function. In response to the STT 200 receiving the request from the second remote control device, a second processor 224-2 in the STT 200 provides a second television 140-2 (FIG. 1) with the requested STT function.

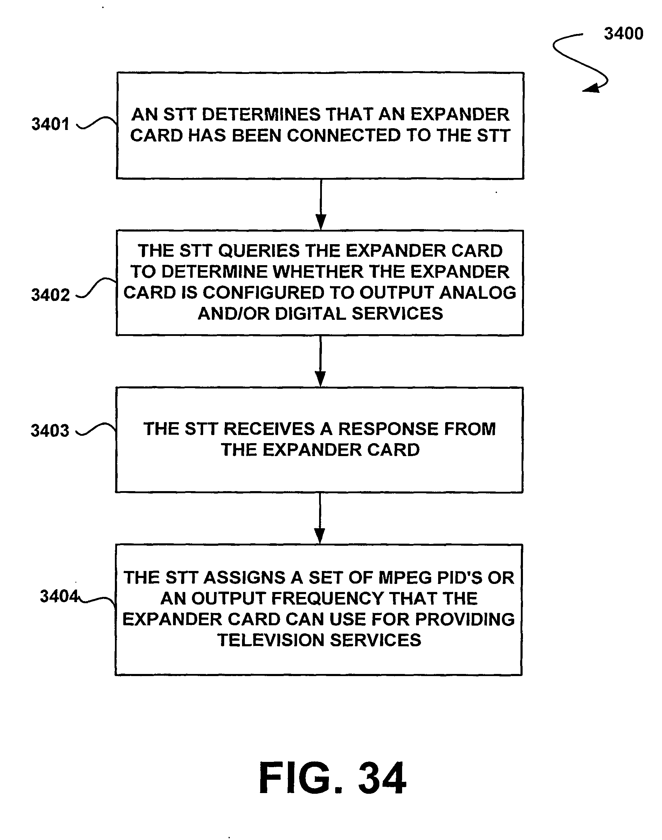

FIG. 34 is a flow chart illustrating a non-limiting example of a method 3400 for enabling an expander card 1500 (FIG. 15B) to distinguish its output from that of other expander cards 1500. The method 3400 may be implemented by the OS 231 (FIG. 15B) and/or by a specialized software application (not shown) that is stored in memory 230 (FIG. 15B). As indicated in step 3401, an STT 200 (FIG. 1) determines that an expander card 1500 (FIG. 15) has been connected to the STT 200. In response to the determination in step 3401, the STT 200 queries the expander card 1500 to determine whether the expander card 1500 is configured to output analog and/or digital services, as indicated in step 3402. The STT 200 then receives a response from the expander card 1500 indicating whether the expander card 1500 is configured to output analog and/or digital services, as indicated in step 3403. In response to receiving the response from the expander card 1500, the STT 200 assigns a set of MPEG program identifiers (PIDs) and/or an output frequency that the expander card 1500 may use when providing television services. The set of MPEG PIDs may be assigned to the expander card 1500 if the expander card 1500 is configured to provide television services that are encoded in an MPEG format (*e.g*., MPEG-2). The output frequency may be assigned to the expander card 1500 if the expander card 1500 is configured to provide analog television services. The set of MPEG PIDs and/or the output frequency that are assigned to an expander card 1500 used to distinguish the output of the expander card 1500 from the output of other expander cards that may be connected to the STT 200. In this manner, a television 140-i (FIG. 1) or STT 1202 (FIG. 12) may be able to tune to and/or extract the output of a certain expander card 1500 based on the output frequency or MPEG PIDs in the output. Other methods for enabling an expander card 1500 to distinguish its output from that of other expander cards 1500 may be used within the scope of the present invention.

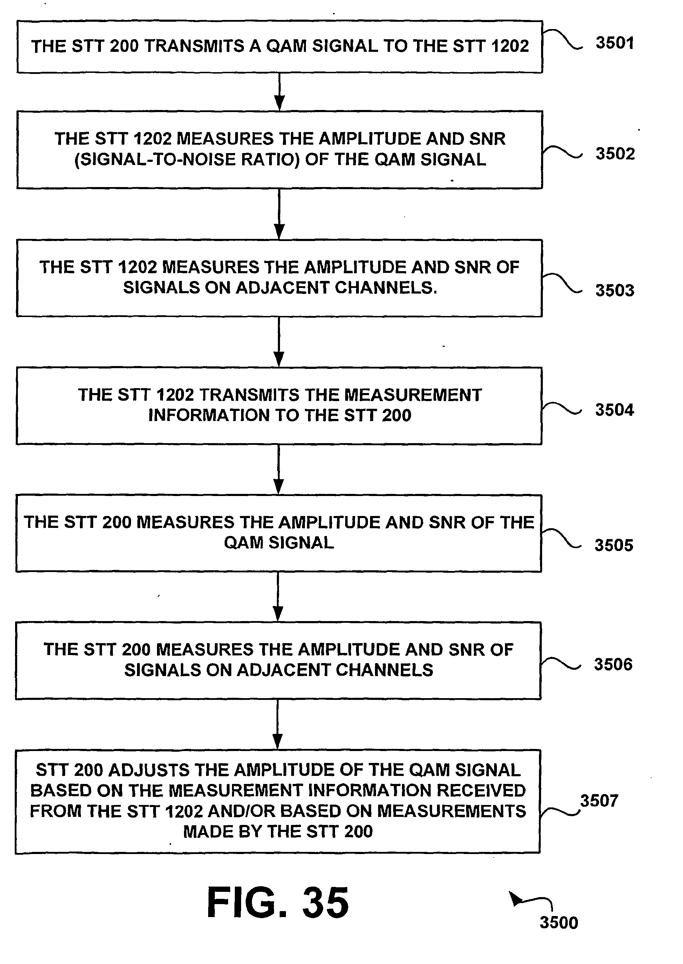

FIG. 35 is a flow chart illustrating a non-limiting example of a method 3500 that may be used to optimize the quality of a QAM signal received by STT 1202 (FIGS. 12A-12C) from the STT 200, while preventing the QAM signal from adversely affecting the quality of other signals being transmitted on channels that are adjacent to or near the channel on which the QAM signal is being transmitted. As indicated in step 3501, the STT 200 transmits a QAM signal to the STT 1202. The STT 1202 receives the QAM signal from the STT 200 and measures the SNR (signal-to-noise ratio) and amplitude of the QAM signal, as indicated in step 3502. The STT 1202 also measures the SNR and amplitude of signals being transmitted on channels that are adjacent to or near the channel on which the QAM signal is being transmitted, as indicated in step 3503. The STT 1202 may perform the aforementioned measurements via, for example, its tuner system (not shown). The STT 1202 then transmits the measurement information obtained in steps 3502 and 3503 to the STT 200, as indicated in step 3504. The STT 1202 may transmit this measurement information via, for example, an OOK modulator.

The STT 200 also measures the amplitude and SNR of the QAM signal transmitted by the STT 200, as indicated in step 3505, and of signals received by the STT 200 on adjacent channels (*i.e*., channels that are adjacent to the channel on which the QAM signal is transmitted to the STT 1202), as indicated in step 3506. The STT 200 may perform these measurements via, for example, the tuner system 225 (FIG. 2), which can receive via the splitter/combiner 1403 (FIG. 14) signals transmitted by the local transmitter 229 (FIG. 14) as well signals transmitted by the headend 110 (FIG. 1). Note that steps 3505 and 3506 may alternatively be performed before or concurrently with steps 3503 and/or 3504.

The STT 200 then adjusts the amplitude of the QAM signal based on the measurement information received from the STT 1202 and/or based on measurements made by the STT 200, as indicated in step 3507. In one implementation, the STT 200 adjusts the amplitude of the QAM signal such that (a) the SNR of the QAM signal as measured and subsequently reported by the STT 1202 is greater than or equal to a specified SNR value, and (b) the amplitude of the QAM signal amplitude as subsequently measured and reported by the STT 1202 and/or as measured by the STT 200, is within a specified amplitude range.

The steps depicted in FIG. 28-35 may be implemented using modules, segments, or portions of code which include one or more executable instructions. In an alternative implementation, functions or steps depicted in FIGS. 28-35 may be executed out of order from that shown or discussed, including substantially concurrently or in reverse order, depending on the functionality involved, as would be understood by those of ordinary skill in the art.

The functionality provided by the methods illustrated in FIGS. 28-35, can be embodied in any computer-readable medium for use by or in connection with a computer-related system (e.g., an embedded system such as a modem) or method. In this context of this document, a computer-readable medium is an electronic, magnetic, optical, semiconductor, or other physical device or means that can contain or store a computer program or data for use by or in connection with a computer-related system or method. Furthermore, the functionality provided by the methods illustrated in FIG. 28-35 can be implemented through hardware (e.g., an application specific integrated circuit (ASIC) and supporting circuitry) or a combination of software and hardware.

It should be emphasized that the above-described embodiments of the invention are merely possible examples, among others, of the implementations, setting forth a clear understanding of the principles of the invention. Many variations and modifications may be made to the above-described embodiments of the invention without departing substantially from the principles of the invention. All such modifications and variations are intended to be included herein within the scope of the disclosure and invention and protected by the following claims. In addition, the scope of the invention includes embodying the functionality of the preferred embodiments of the invention in logic embodied in hardware and/or software-configured mediums.

## Claims

1. A method of providing different television services to different televisions via a first set-top terminal, STT, located at a customer premises, the method comprising the STT:
receiving via a first transmission link that is coupled to the STT (200) a broadband signal comprising television service signals transmitted by a headend (110) via a communications network (130) wherein the STT (200) is coupled to the first transmission link to receive the broadband signal from the headend through a splitter module (602), and the splitter module is operable to provide television service or broadband signals to a first television (140-2);
extracting from the broadband signal television service signals for a first television service to be displayed by a first television (140-2) located at the customer premises and television service signals for a second television service to be displayed by a second television (140-1) located at the customer premises;
transmitting the first television service to the first television via the first transmission link at a frequency that is above the frequency band of the broadband signal that is received by the STT from the headend; and
transmitting the second television service to the second television (140-1),
receiving the first television service by the splitter module (602) from the STT; and,
converting the first television service signal by the splitter module (602) to a lower frequency that corresponds to a predetermined television channel.

2. The method of claim 1, further comprising:
prior to transmitting the first television service by the STT, receiving by the STT a request for the first television service from a remote control device that is configured to control the first television.

3. The method of claim 1, further comprising:
passing the first television service by the splitter module to the first television.

4. A local television network system (101-3) comprising: a set-top terminal, STT, (200) for supplying two different television services from a broadband signal transmitted by a headend, and a splitter module (602) coupled to the STT (200) and to a first television (140-2)
wherein, the STT (200) is coupled to a first transmission link to receive a broadband signal transmitted from the headend through the splitter module (602), and the STT comprises:
a tuner for extracting from the broadband signal received via the first transmission link, television service signals for a first television service to be displayed by said first television (140-2) and television service signals for a second television service to be displayed by a second television (140-1);
an ultra-high-frequency (UHF) transmitter (801);
a processor (220) that is programmed to cause in response to the STT receiving from a first remote control device user input requesting the first television service, the UHF transmitter to transmit the first television service via the first transmission link to a first television (140-2) at a frequency that is above the frequency band of the broadband signal that is received by the STT; and
an output system (228) for outputting the second television service via a second transmission link from the STT to the second television (140-1);
wherein the splitter module (602) is operable to receive the first television service from the STT (200) and to pass the first television service to the first television (140-2), wherein the splitter module is also configured to convert the frequency of the first television service to a frequency corresponding to a predetermined television channel.

5. The system of claim 4, wherein the processor of the STT is programmed to cause the output system (228) to transmit the second television service via the second transmission link to the second television in response to the STT receiving from a second remote control device user input requesting the second television service.

6. The system of claim 4 further comprising at least one of said second television (140-2), and said first television.

7. The system of claim 4, wherein the STT comprises: a communications interface (222) including a diplexer (802) to receive the television service signals that were transmitted by the headend and to pass the television service signals to the tuner (225) via a directional coupler (804), the processor comprising a signal processing system (220) to demodulate and decode the television service signals and to forward to the output system (228) the television service signal corresponding to the second television service for the second television (140-1) and to forward to the UHF transmitter (229) the television service signal corresponding to the first television service for the first television (140-2), the UHF transmitter (229) being arranged to transmit the first television service to the first television (140-2) via the directional coupler (804) and diplexer (802) of the communications interface (222).

8. The system of claim 4 wherein the splitter module (602) comprises a switch (730) arranged to selectively couple the broadband signal to the STT (200) or to said first television (140-2).

9. The system of claim 8 wherein the switch (730) is configured to couple the broadband signal to the first television (140-2) in the event that the STT (200) is switched off.

## Patentansprüche

1. Verfahren zum Bereitstellen verschiedener Fernsehdienste für verschiedene Fernseher über ein erstes Set-Top Terminal, STT, das sich bei einem Kunden befindet, wobei das Verfahren umfasst, dass das STT:
über eine erste Sendeverbindung, die mit dem STT (200) verbunden ist, ein Breitbandsignal empfängt, das Fernsehdienstsignale aufweist, die von einem Headend (110) über ein Kommunikationsnetz (130) gesendet werden, wobei das STT (200) an die erste Sendeverbindung gekoppelt ist, um das Breitbandsignal von dem Headend durch ein Verteilermodul (602) zu empfangen, und wobei das Verteilermodul dazu betreibbar ist, Fernsehdienst oder Breitbandsignale an einen ersten Fernseher (140-2) zu liefern;
aus dem Breitbandsignal Fernsehdienstsignale für einen ersten Fernsehdienst extrahiert, die von einem ersten Fernseher (140-2) anzuzeigen sind, der sich beim Kunden befindet, und Fernsehdienstsignale für einen zweiten Fernsehdienst, die von einem zweiten Fernseher (140-1) anzuzeigen sind, der sich beim Kunden befindet;
den ersten Fernsehdienst an den ersten Fernseher über die erste Sendeverbindung mit einer Frequenz sendet, die über dem Frequenzband des Breitbandsignals liegt, das von dem STT von dem Headend empfangen wird, und
Senden den zweiten Fernsehdienst an den zweiten Fernseher (140-1) sendet,
den ersten Fernsehdienst durch das Verteilermodul (620) von dem STT empfängt; und
das erste Fernsehdienstsignal durch das Verteilermodul (602) in eine niedrigere Frequenz konvertiert, die einem vorgegebenen Fernsehkanal entspricht.

2. Verfahren nach Anspruch 1, das des Weiteren umfasst:
vor dem Senden des ersten Fernsehdienstes durch das STT, Empfangen durch das STT einer Anfrage nach dem ersten Fernsehdienst von einer Fernbedienungsvorrichtung, die dazu konfiguriert ist, den ersten Fernseher zu steuern.

3. Verfahren nach Anspruch 1, das des Weiteren umfasst:
Weiterleiten des ersten Fernsehdienstes durch das Verteilermodul an den ersten Fernseher.

4. Lokales Fernsehnetzwerksystem (101-3), das aufweist: ein Set-Top Terminal, STT, (200) zum Liefern von zwei verschiedenen Fernsehdiensten von einem Breitbandsignal, das von einem Headend gesendet wird, und ein Verteilermodul (602), das mit dem STT (200) und mit einem ersten Fernseher (140-2) verbunden ist,
wobei das STT (200) an eine erste Sendeverbindung gekoppelt ist, um ein Breitbandsignal zu empfangen, das von dem Headend durch das Verteilermodul (602) gesendet wird, und wobei das STT aufweist:
einen Tuner, um aus dem über die erste Sendeverbindung empfangenen Breitbandsignal Fernsehdienstsignale für einen ersten Fernsehdienst zu extrahieren, die von dem ersten Fernseher (140-2) anzuzeigen sind, und Fernsehdienstsignale für einen zweiten Fernsehdienst, die von einem zweiten Fernseher (140-1) anzuzeigen sind;
einen Ultrahochfrequenz (UHF) -Sender (801);
einen Prozessor (220), der dazu programmiert ist, im Ansprechen darauf, dass das STT von einer ersten Fernbedienungsvorrichtung eine Benutzereingabe empfängt, die den ersten Fernsehdienst anfordert, zu veranlassen, dass der UHF-Sender den ersten Fernsehdienst über die erste Sendeverbindung an einen ersten Fernseher (140-2) mit einer Frequenz sendet, die über dem Frequenzband des Breitbandsignals liegt, das von dem STT empfangen wird; und
ein Ausgabesystem (228) zum Ausgeben des zweiten Fernsehdienstes über eine zweite Sendeverbindung von dem STT an den zweiten Fernseher (140-1);
wobei das Verteilermodul (602) dazu betreibbar ist, den ersten Fernsehdienst von dem STT (200) zu empfangen und den ersten Fernsehdienst an den ersten Fernseher (140-2) weiterzuleiten, wobei das Verteilermodul auch dazu konfiguriert ist, die Frequenz des ersten Fernsehdienstes in eine Frequenz zu konvertieren, die einem vorgegebenen Fernsehkanal entspricht.

5. System nach Anspruch 4, wobei der Prozessor des STT dazu programmiert ist, zu veranlassen, dass das Ausgabesystem (228) den zweiten Fernsehdienst über die zweite Sendeverbindung an den zweiten Fernseher sendet, im Ansprechen darauf, dass das STT von einer zweiten Fernbedienungsvorrichtung eine Benutzereingabe empfängt, die den zweiten Fernsehdienst anfordert.

6. System nach Anspruch 4, das des Weiteren wenigstens eines des zweiten Fernsehers (140-2) und des ersten Fernsehers aufweist.

7. System nach Anspruch 4, wobei das STT aufweist: eine Kommunikationsschnittstelle (222) mit einem Diplexer (802), um die Fernsehdienstsignale zu empfangen, die von dem Headend gesendet wurden, und um die Fernsehdienstsignale an den Tuner (225) über einen Richtungskoppler (804) weiterzuleiten, wobei der Prozessor ein Signalverarbeitungssystem (220) aufweist, um die Fernsehdienstsignale zu demodulieren und zu decodieren, und um das Fernsehdienstsignal, das dem zweiten Fernsehdienst für den zweiten Fernseher (140-1) entspricht, an das Ausgabesystem (228) weiterzuleiten und das Fernsehdienstsignal, das dem ersten Fernsehdienst für den ersten Fernseher (140-2) entspricht, an den UHF-Sender (229) weiterzuleiten, wobei der UHF-Sender (229) dazu ausgelegt ist, den ersten Fernsehdienst über den Richtungskoppler (804) und den Diplexer (802) der Kommunikationsschnittstelle (222) an den ersten Fernseher (140-2) zu senden.

8. System nach Anspruch 4, wobei das Verteilermodul (602) einen Schalter (730) aufweist, der dazu ausgelegt ist, das Breitbandsignal selektiv an das STT (200) oder an den ersten Fernseher (140-2) zu koppeln.

9. System nach Anspruch 8, wobei der Schalter (730) dazu konfiguriert ist, das Breitbandsignal an den ersten Fernseher (140-2) zu koppeln, wenn das STT (200) ausgeschaltet ist.

## Revendications

1. Procédé de fourniture de différents services de télévision à différentes télévisions par l'intermédiaire d'un premier terminal décodeur, STT, situé dans les locaux d'un client, le procédé comprenant, par le STT :
la réception, par l'intermédiaire d'une première liaison de transmission qui est couplée au STT (200), d'un signal à large bande comprenant des signaux de service de télévision transmis par une tête de réseau (110) par l'intermédiaire d'un réseau de communication (130), dans lequel le STT (200) est couplé à la première liaison de transmission pour recevoir le signal à large bande à partir de la tête de réseau à travers un module diviseur (602), et le module diviseur est utilisable pour fournir un service de télévision ou des signaux à large bande à une première télévision (140-2) ;
l'extraction, à partir du signal à large bande, de signaux de service de télévision pour un premier service de télévision destiné à être affiché par une première télévision (140-2) située dans les locaux du client et de signaux de service de télévision pour un second service de télévision destiné à être affiché par une seconde télévision (140-1) située dans les locaux du client ;
la transmission, du premier service de télévision, à la première télévision par l'intermédiaire de la première liaison de transmission à une fréquence qui est supérieure à la bande de fréquence du signal à large bande qui est reçu par le STT à partir de la tête de réseau ; et
la transmission du second service de télévision à la seconde télévision (140-1),
recevant le premier service de télévision par le module diviseur (602) à partir du STT ; et,
la conversion du signal de premier service de télévision par le module diviseur (602) en une fréquence plus basse qui correspond à une chaîne de télévision prédéterminée.

2. Procédé selon la revendication 1, comprenant en outre :
avant de transmettre le premier service de télévision par le STT, la réception, par le STT, d'une demande du premier service de télévision à partir d'un dispositif de télécommande qui est configuré pour commander la première télévision.

3. Procédé selon la revendication 1, comprenant en outre :
le passage du premier service de télévision par le module diviseur à la première télévision.

4. Système de réseau de télévision local (101-3), comprenant :
un terminal décodeur, STT, (200) pour fournir deux différents services de télévision à partir d'un signal à large bande transmis par une tête de réseau, et un module diviseur (602) couplé au STT (200) et à une première télévision (140-2),
dans lequel le STT (200) est couplé à une première liaison de transmission pour recevoir un signal à large bande transmis à partir de la tête de réseau à travers le module diviseur (602), et le STT comprend :
un syntoniseur pour extraire, à partir du signal à large bande reçu par l'intermédiaire de la première liaison de transmission, des signaux de service de télévision pour un premier service de télévision destiné à être affiché par ladite première télévision (140-2) et des signaux de service de télévision pour un second service de télévision destiné à être affiché par une seconde télévision (140-1) ;
un transmetteur à ultra haute fréquence (UHF) (801) ;
un processeur (220) qui est programmé pour faire en sorte que, en réponse à la réception, par le STT, à partir d'un premier dispositif de télécommande, d'une entrée utilisateur demandant le premier service de télévision, le transmetteur UHF transmette le premier service de télévision par l'intermédiaire de la première liaison de transmission à une première télévision (140-2) à une fréquence qui est supérieure à la bande de fréquence du signal à large bande qui est reçu par le STT ; et
un système de sortie (228) pour envoyer le second service de télévision par l'intermédiaire d'une seconde liaison de transmission du STT à la seconde télévision (140-1) ;
dans lequel le module diviseur (602) est utilisable pour recevoir le premier service de télévision à partir du STT (200) et pour faire passer le premier service de télévision à la première télévision (140-2), dans lequel le module diviseur est également configuré pour convertir la fréquence du premier service de télévision en une fréquence correspondant à une chaîne de télévision prédéterminée.

5. Système selon la revendication 4, dans lequel le processeur du STT est programmé pour faire en sorte que le système de sortie (228) transmette le second service de télévision par l'intermédiaire de la seconde liaison de transmission à la seconde télévision en réponse à la réception, par le STT, à partir d'un second dispositif de télécommande, d'une entrée utilisateur demandant le second service de télévision.

6. Système selon la revendication 4, comprenant en outre au moins une parmi ladite seconde télévision (140-2) et ladite première télévision.

7. Système selon la revendication 4, dans lequel le STT comprend : une interface de communication (222) comprenant un diplexeur (802) pour recevoir les signaux de service de télévision qui ont été transmis par la tête de réseau et pour faire passer les signaux de service de télévision au syntoniseur (225) par l'intermédiaire d'un coupleur directionnel (804), le processeur comprenant un système de traitement de signal (220) pour démoduler et décoder les signaux de service de télévision et pour réacheminer, au système de sortie (228), le signal de service de télévision correspondant au second service de télévision pour la seconde télévision (140-1) et pour réacheminer, au transmetteur UHF (229), le signal de service de télévision correspondant au premier service de télévision pour la première télévision (140-2), le transmetteur UHF (229) étant agencé pour transmettre le premier service de télévision à la première télévision (140-2) par l'intermédiaire du coupleur directionnel (804) et du diplexeur (802) de l'interface de communication (222).

8. Système selon la revendication 4, dans lequel le module diviseur (602) comprend un commutateur (730) agencé pour coupler sélectivement le signal à large bande au STT (200) ou à ladite première télévision (140-2).

9. Système selon la revendication 8, dans lequel le commutateur (730) est configuré pour coupler le signal à large bande à la première télévision (140-2) au cas où le STT (200) est éteint.
